(19) Europäisches Patentamt
European Patent Office
Office européen des brevets

(11) EP 0 608 432 B1

(12) **EUROPEAN PATENT SPECIFICATION**

(45) Date of publication and mention
of the grant of the patent:
**21.02.2001 Bulletin 2001/08**

(51) Int Cl.[7]: **G02B 5/30**, G02B 27/28,
G11B 7/09, G11B 11/10

(21) Application number: **93914992.8**

(22) Date of filing: **13.07.1993**

(86) International application number:
**PCT/JP93/00964**

(87) International publication number:
**WO 94/01794 (20.01.1994 Gazette 1994/03)**

(54) **POLARIZING ELEMENT AND OPTICAL ELEMENT, AND OPTICAL HEAD**

POLARISIERENDES ELEMENT, OPTISCHES ELEMENT UND OPTISCHER KOPF

ELEMENT DE POLARISATION, ELEMENT OPTIQUE ET TETE OPTIQUE

(84) Designated Contracting States:
**DE FR GB NL**

(30) Priority: **14.07.1992 JP 18688592**
**17.03.1993 JP 5743193**
**23.03.1993 JP 6434893**

(43) Date of publication of application:
**03.08.1994 Bulletin 1994/31**

(60) Divisional application: **99203376.1 / 0 981 063**

(73) Proprietor: **SEIKO EPSON CORPORATION**
**Shinjuku-ku, Tokyo 163-0811 (JP)**

(72) Inventors:
• **TAKEKOSHI, Taro Seiko Epson Corporation**
**Suwa-shi Nagano-ken 392 (JP)**
• **YONEKUBO, Masatoshi**
**Seiko Epson Corporation**
**Suwa-shi Nagano-ken 392 (JP)**
• **TAKEDA, Takashi Seiko Epson Corporation**
**Suwa-shi Nagano-ken 392 (JP)**
• **ARIMURA, Toshio Seiko Epson Corporation**
**Suwa-shi Nagano-ken 392 (JP)**

(74) Representative: **Sturt, Clifford Mark et al**
**Miller Sturt Kenyon**
**9 John Street**
**London WC1N 2ES (GB)**

(56) References cited:
**EP-A- 0 573 905**     **WO-A-92/22838**
**JP-A- 1 119 929**     **JP-A- 61 017 103**

• **1992 SID INTERNATIONAL
SYMPOSIUM,DIGEST OF TECHNICAL PAPERS,
17 May 1992, BOSTON,US pages 427 - 429
M.P.WEBER '23.3:RETROREFLECTING SHEET
POLARIZER'**

**Description**

TECHNICAL FIELD

The present invention relates to a polarizer, an optical element, and a small sized optical head constructed with these polarizer and optical element. The optical head in accordance with the present invention has a configuration suitable for use in particular in recording and reproduction of information on a magneto-optical recording medium.

BACKGROUND ART

A conventional polarizer such as a polarizing beam splitter is produced by depositing a polarizing optical thin film on triangular prisms of glass by means of vacuum evaporation and further by bonding these triangular prisms to each other. Conventional optical heads for recording and reproducing of information on a magneto-optical recording medium are realised with a polarizing beam splitter as disclosed for example in U.S. Patent No. 4, 764, 912, or with a dichroic polarizing plate as disclosed for example in U.S. Patent No. 4, 933, 924, or otherwise with a birefringent prism such as a Wollaston prism. The optical parts used in these techniques are of bulk type which are produced from optical glass by means of cutting and lapping.

U.S. Patent No. 4,733,065 describes a polarizing beamsplitter having a diffraction grating and which is divided into two areas. Each area comprises a different grating pattern which diffracts light in different directions. The beamsplitter uses a relief type diffraction grating consisting of a plurality of inclined surfaces.

SID International Symposium, Digest of technical papers, 17th May 1992, pages 427 - 429, M.F. Weber: "Retroreflecting Sheet Polarizer" discloses a sheet polariser formed of a film having parallel contiguous grooves disposed on one side thereof. Each groove is formed by two oppositely inclined planes formed in the surface of the substrate, the angle between each of the inclined planes and the plane of the surface of the film being 45°. The parallel grooves run along the whole length of the film.

However, conventional dichroic polarizers do not have high transparency. Therefore, it is impossible to obtain a sufficient amount of detected light required for signal detection. In conventional polarizing beam splitters, because a large difference occurs in the directions of detected light, one piece of dichroic polarizing plate can detect light with respect to only one polarizing direction. On the other hand, a birefringent prism is expensive. Moreover, in these optical heads described above, the bulk-type optical part occupies a large volume and the processing thereof needs a high cost. In addition, high accuracy positioning is required for various points in assembling process, which makes it difficult to achieve a small size, low cost, and light weight.

This further leads to sacrifice in performance associated with access speed. These have been obstacles to widespread use of conventional optical heads. Furthermore, there is a problem with the layout of an optical system that a light emitting device and a light detecting device are arranged separately. As a result, separate optical parts are required for exclusive use for each of the optical system in a going path starting from a light emitting device and the optical system in a return path ending at a light detecting device, which leads to undesirable duplication in the number of parts and also in space. In addition, because positioning errors are accumulated, it is difficult to achieve desired positioning accuracy associated with the optical system. As a result, troublesome adjustment is required to eliminate the initial offset in detected signals, in particular focusing error signals.

Accordingly, it is an object of the present invention to solve the above problems, more specifically, to provide a thin polarizer with high transparency and a high extinction ratio, and also to provide a small sized and inexpensive polarizer formed in a single piece which can perform detection with respect to a plurality of polarization directions. It is another object of the present invention to provide a means for deleting the initial offset in a focusing error signal so as to make adjustment process unnecessary. It is a further object of the present invention to provide a method for efficiently producing a polarizer and optical element of the above-mentioned type at a low cost. It is still another object of the present invention to provide a great reduction in size and in the number of optical parts required for an optical head and also to provide a simplified adjustment process. It is another object of the present invention to provide a means for obtaining a magneto-optical signal with a high signal-to-noise ratio.

DISCLOSURE OF THE INVENTION

According to a first aspect of the present invention, there is provided a polariser in which an inclined plane is formed in at least two locations on the same surface of the same transparent substrate and extending into the substrate and a polarising optical thin film is formed on each said inclined plane, wherein:

a space defined by the inclined plane and the plane of the surface of the substrate is filled with a transparent material characterised in that:
the line of intersection of each inclined plane with the plane of the surface of the substrate is a straight line;
the angle between said line of intersection of a first inclined plane and a line of a reference direction of said substrate is +A°; and
the angle between said line of intersection of a second inclined plane and said line of a reference direction is - A° for detecting specific polarization directions in at least two different symmetrical directions by one polarizer.

In a polariser of the present invention, a plurality of said inclined planes may be formed on the same surface of the same substrate in each of at least two regions;

wherein the inclined planes within each region are parallel and contiguous such that they form a sawtooth-shaped cross-section in a perpendicular direction of said substrate comprising a plurality of sawtooth elements;

the line of intersection of a plane of each of said sawtooth elements with the plane of the surface of the substrate defines a straight edge line (301, 303);

the angle between the straight edge lines in a first region (1202) and said line of a reference direction of said substrate is +A°; and

the angle between the straight edge lines in a second region (1205) and said line of a reference direction of said substrate is -A°.

A polariser of the present invention may comprise a first optical member and a second optical member bonded to said first optical member, said inclined planes being formed in either said first optical member or said second optical member.

According to a second aspect of the present invention, there is provided an optical head for use in an optical recording device for recording/reproducing information on/from magneto-optical recording medium, comprising:

a semiconductor laser acting as a light source;

a light beam splitter means for splitting light into at least two directions;

a light receiving device; and

a polariser of the present invention, said polariser being disposed between said light beam splitter means and said light receiving device, wherein

light from the light source, directed onto the magneto-optical recording medium an returning light from the magneto-optical recording medium is transmitted through the light beam splitter such that substantially only returning light from the magneto-optical recording medium is split into at least two directions; and

said reference direction of the substrate is the polarisation direction of returning light from the magneto-optical recording medium.

According to a third aspect of the present invention, there is provided a method of manufacturing a polariser of the present invention, wherein said polarising optical thin film is formed by transferring a sawtooth-like shape to a transparent substrate by means of hot-stamping and further depositing a dielectric thin film on it by means of evaporation.

According to a fourth aspect of the present invention, there is provided a method of manufacturing a polariser of the present invention, wherein said polarising optical thin film is formed by pressing and rolling a roller having a sawtooth-shaped structure on its surface on a transparent substrate so as to continuously transfer a sawtooth-like shape to said transparent substrate and further depositing a dielectric thin film on said substrate by means of evaporation.

According to a fifth aspect of the present invention, there is provided a method of manufacturing a polariser of the present invention, including the steps of:

forming recesses with inclined planes in either said first optical member or said second optical member;

depositing a multi-layer dielectric thin film on said inclined planes by means of evaporation so as to obtain a function of a polarising splitter;

filling said recesses with a transparent resin or liquid; and

bonding said first and second optical members to each other.

According to a final aspect of the present invention, there is provided a method of manufacturing polariser of the present invention, wherein the polarising optical thin film is formed by a method including the steps of:

performing injection moulding with a resin or glass so as to transfer a sawtooth structure; and

depositing a dielectric thin film on the sawtooth structure by means of evaporation.

BRIEF DESCRIPTION OF THE DRAWINGS

Figure 1 shows a polarizer, wherein a plan view is shown in Figure 1a and a cross-sectional view is shown in Figure 1b;

Figures 2-53 relate to embodiments in accordance with the present invention, wherein:

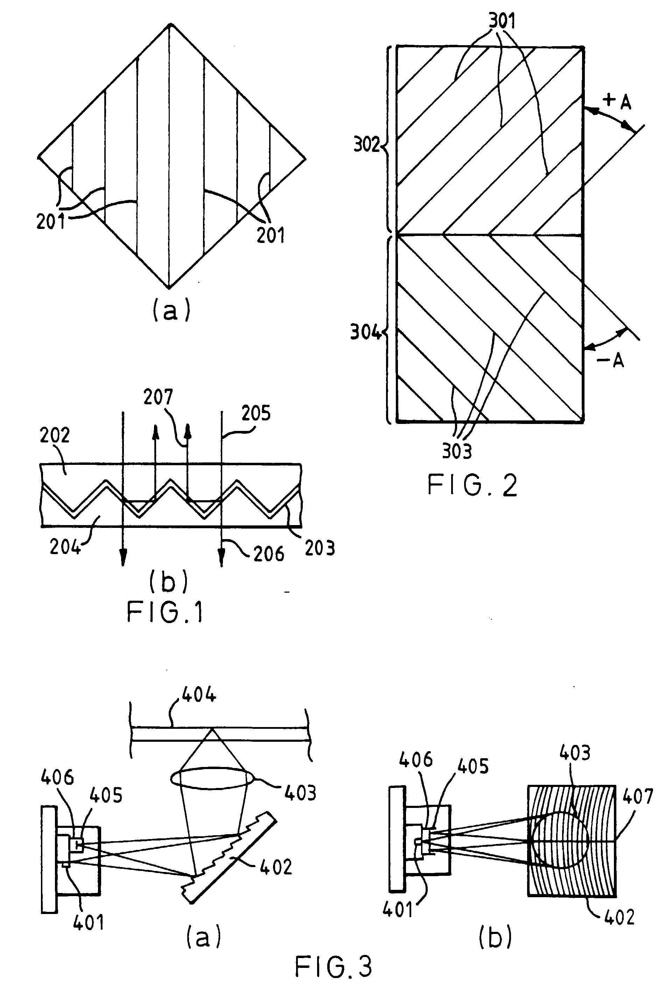

Figure 2 is a plan view of a polarizer in accordance with embodiment 2 of the present invention;

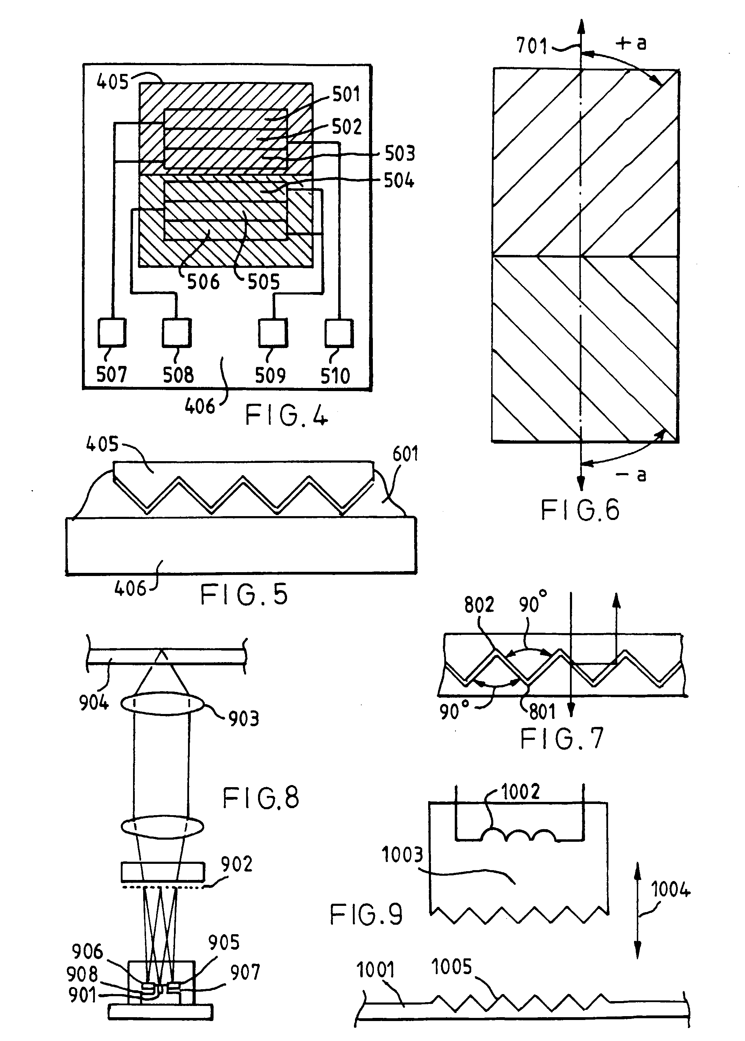

Figure 3 is an optical head in accordance with embodiment 5 of the present invention, wherein a side view is shown in Figure 5a and a plan view is shown in Figure 5b;

Figure 4 is a plan view showing a light receiving device including its peripheral portions in accordance with embodiment 5 of the present invention;

Figure 5 is a cross-sectional view of a polarizer and the light receiving device in accordance with embodiment 5;

Figure 6 is a plan view of the polarizer of embodiment 5;

Figure 7 is a cross-sectional view of the polarizer in accordance with embodiment 5, showing its saw-tooth-like structure;

Figure 8 is a schematic diagram showing an optical head in accordance with embodiment 10;

Figure 9 is a schematic diagram showing a method for producing a polarizer in accordance with embodiment 11;

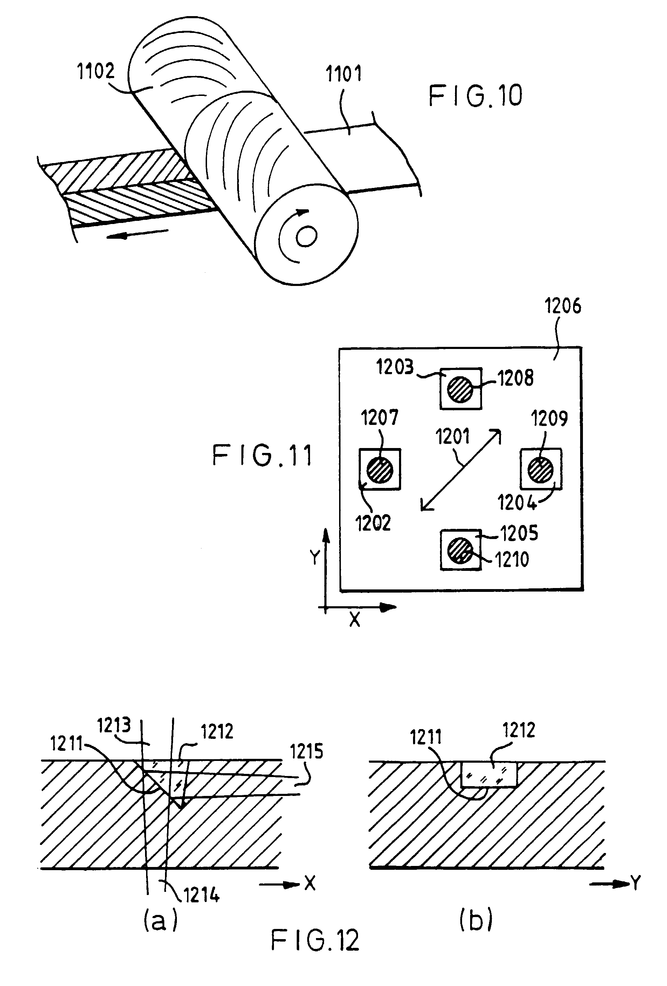

Figure 10 is a schematic diagram showing a method for producing a polarizer in accordance with embodiment 12;

Figure 11 is a plan view of a polarizer in accordance with embodiment 3;

Figure 12 shows the polarizer in accordance with embodiment 3, wherein Figure 12a is a cross-sectional view taken in the X-direction, and Figure 12b is a cross-sectional view taken in the Y-direction;

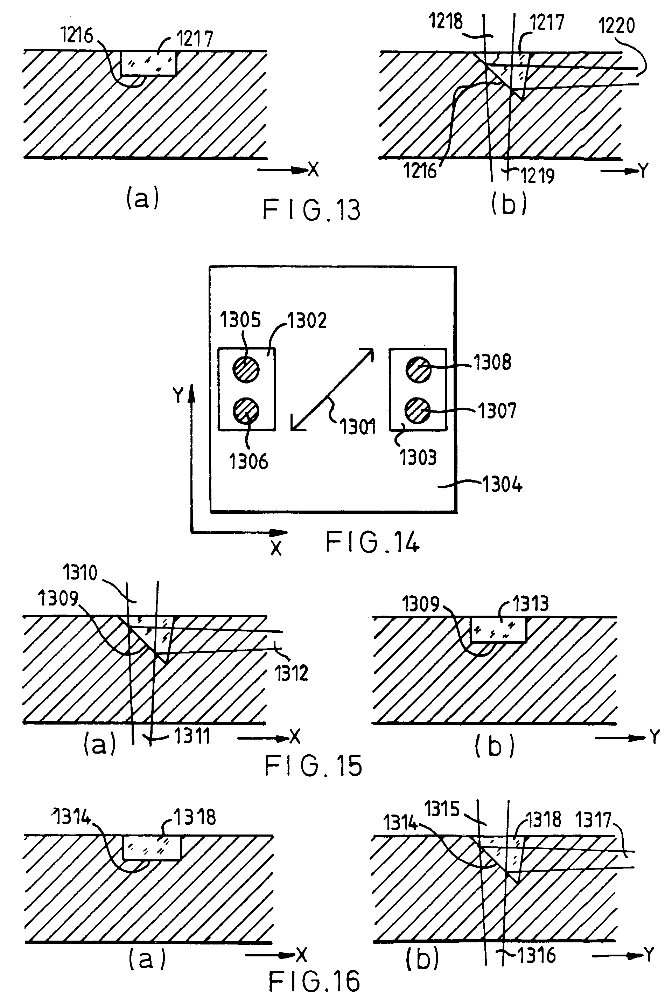

Figure 13 also shows the polarizer in accordance with embodiment 3, wherein Figure 13a is a cross-sectional view taken in the X-direction, and Figure 13b is a cross-sectional view taken in the Y-direction;

Figure 14 shows a polarizer in accordance with embodiment 4;

Figure 15 shows the polarizer in accordance with embodiment 4, wherein Figure 15a is a cross-sectional view taken in the X-direction, and Figure 15b is a cross-sectional view taken in the Y-direction;

Figure 16 also shows the polarizer in accordance with embodiment 4, wherein Figure 16a is a cross-sectional view taken in the X-direction, and Figure 16b is a cross-sectional view taken in the Y-direction;

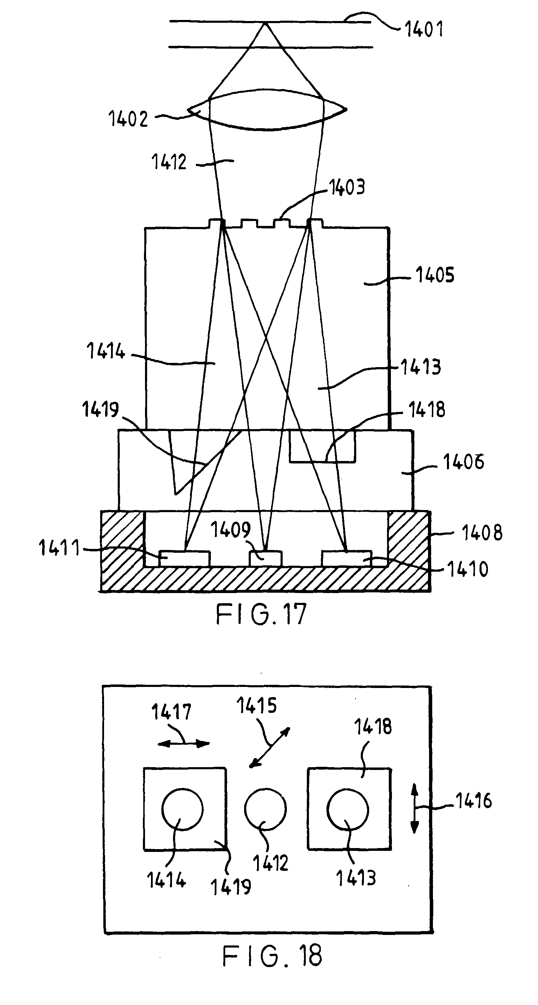

Figure 17 is a side view of an optical head in accordance with embodiment 6;

Figure 18 is a plan view of the optical head in accordance with embodiment 6;

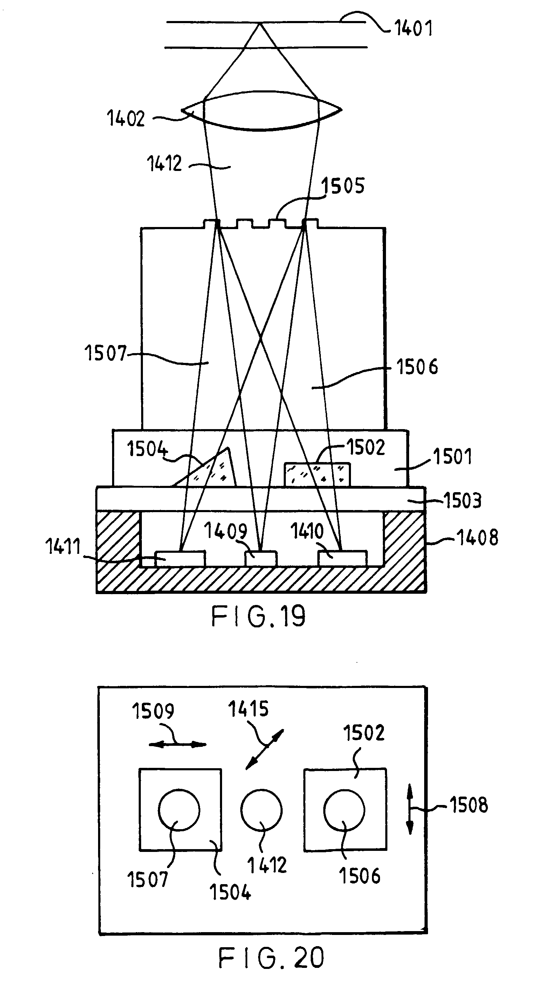

Figure 19 is a side view of an optical head in accordance with embodiment 7;

Figure 20 is a plane view of a polarizer of the optical head in accordance with embodiment 7;

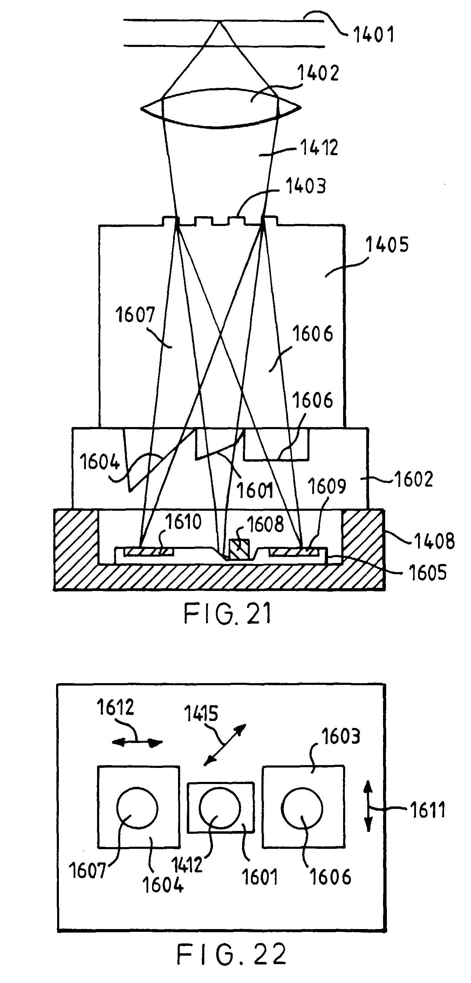

Figure 21 is a side view of an optical head in accordance with embodiment 8;

Figure 22 is a plane view of a polarizer of the optical head in accordance with embodiment 8;

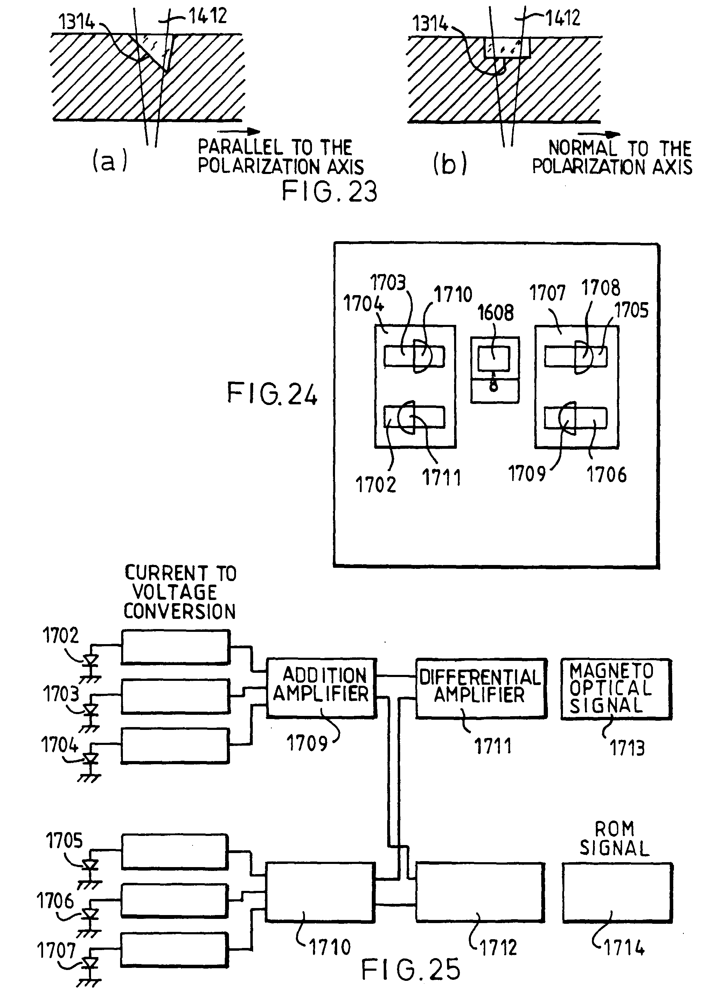

Figure 23 shows the optical head in accordance with embodiment 8, wherein Figure 23a is a cross-sectional view taken in the same direction as the polarization direction of a light beam emitted by a laser, and Figure 23b is a cross-sectional view taken in the direction perpendicular to polarization direction of a light beam emitted by a laser;

Figure 24 is a plan view of a light receiving device in accordance with embodiment 9;

Figure 25 is a block diagram showing a signal detecting means for detecting a magneto-optical signal in embodiment 9;

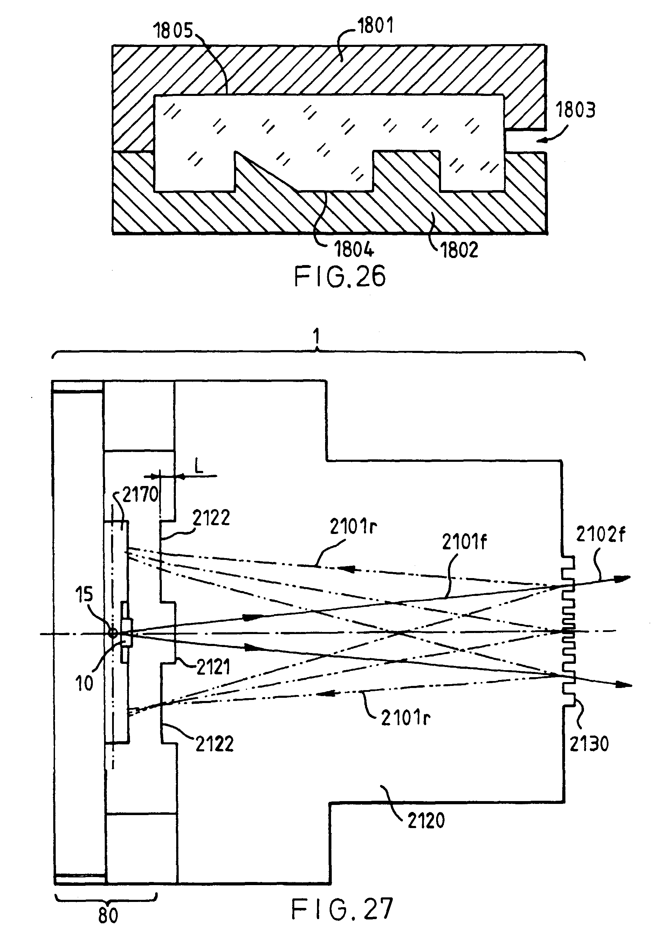

Figure 26 is a schematic diagram showing a method for producing a polarizer in accordance with embodiment 13;

Figure 27 is a sectional side view of an optical head including an optical element in accordance with embodiment 14;

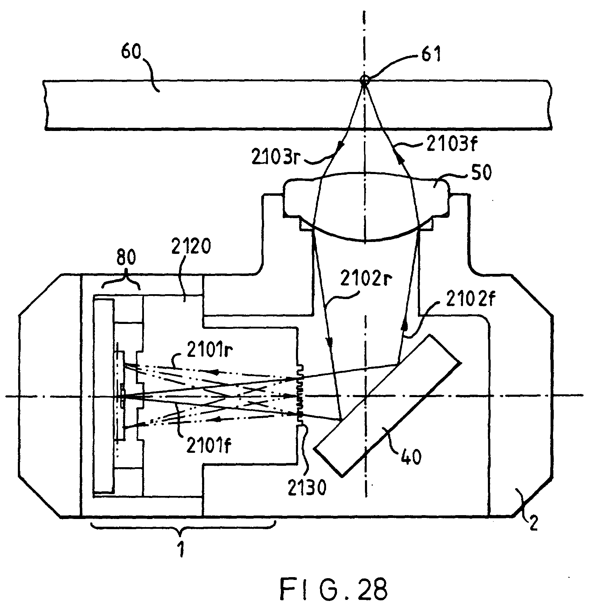

Figure 28 is a sectional side view of an optical pickup including the optical head in accordance with embodiment 14;

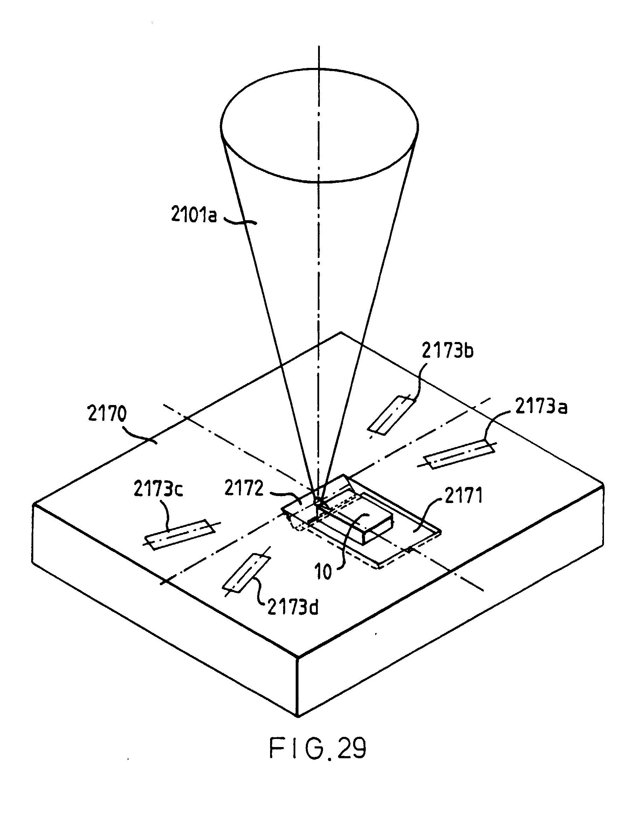

Figure 29 is a perspective view of a light emitting device and a light receiving device of the optical head in accordance with embodiment 14;

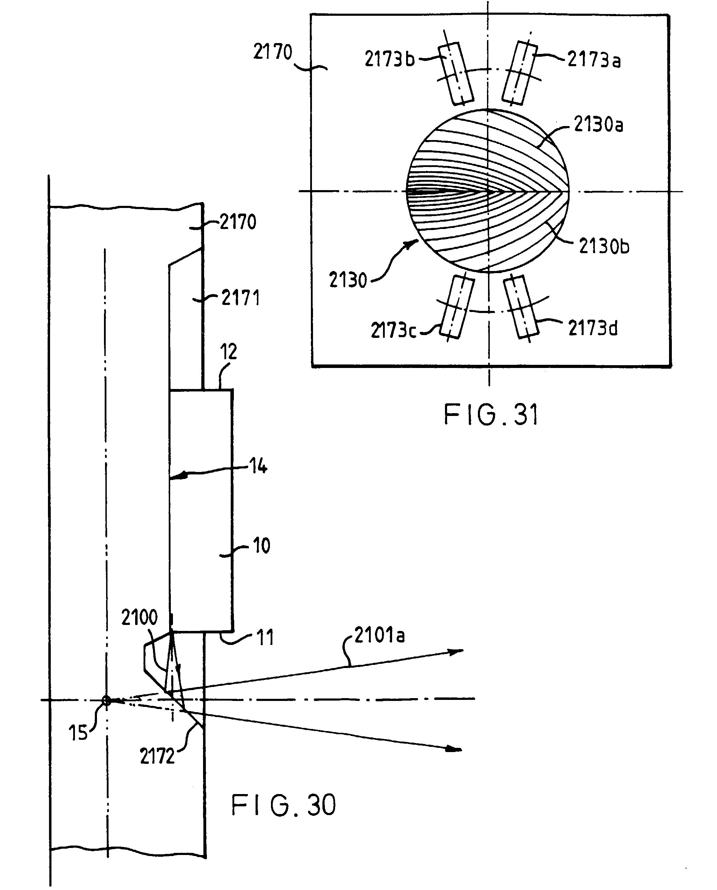

Figure 30 is a cross-sectional view of the light emitting device and the light receiving device of the optical head in accordance with embodiment 14;

Figure 31 is a plan view of a hologram of the optical head in accordance with embodiment 14;

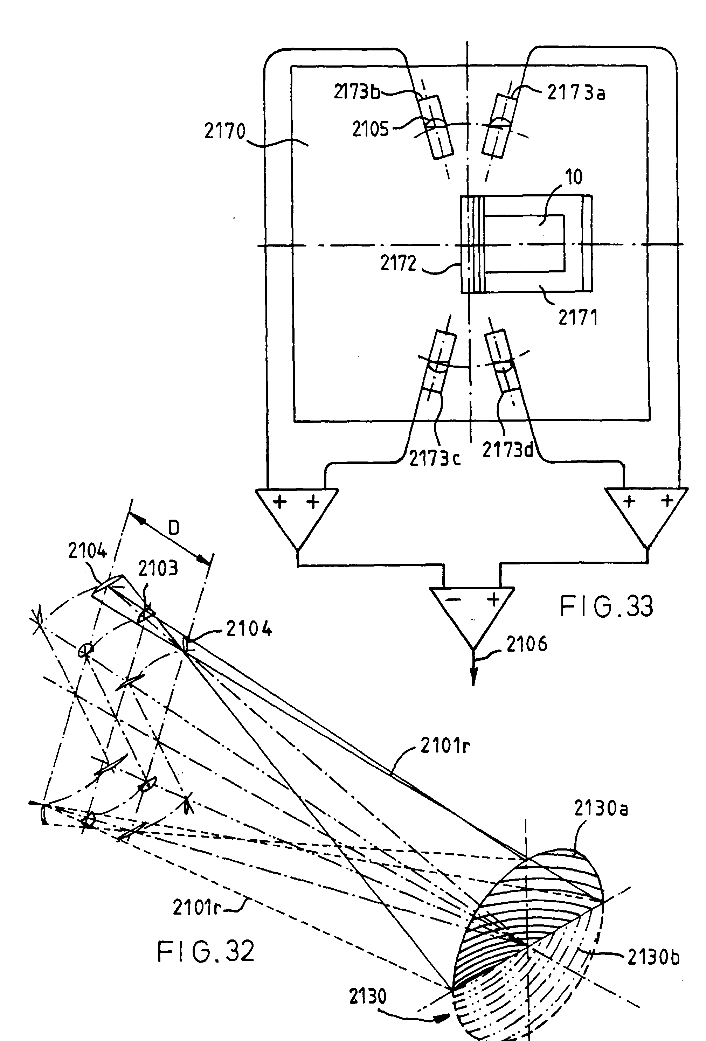

Figure 32 is a perspective view showing the function of the hologram of the optical head in accordance with embodiment 14;

Figure 33 is a plan view of the light emitting device and the light receiving device of the optical head in accordance with embodiment 14;

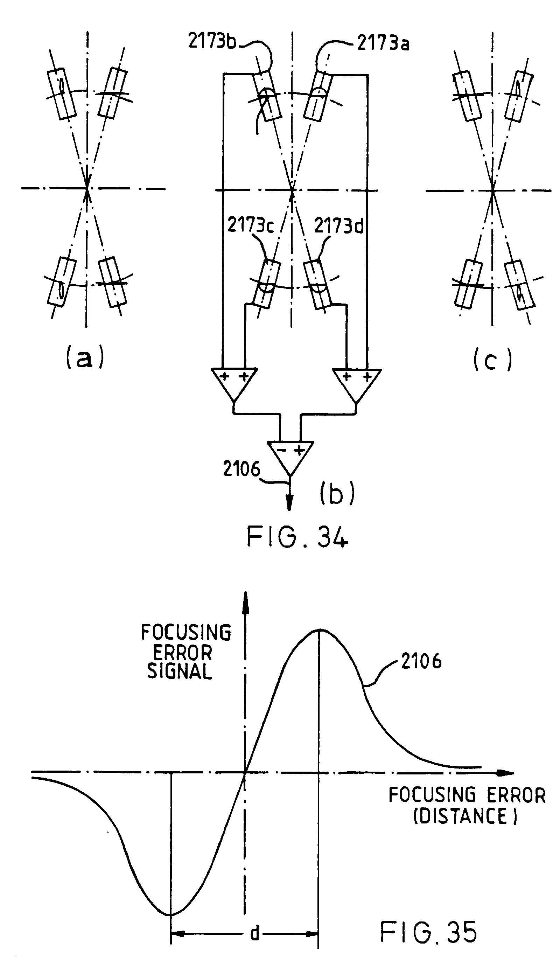

Figures 34a, 34b and 34c are a schematic diagram showing the change of the receiving light spot;

Figure 35 is a graph showing a focusing error signal of the optical head in accordance with embodiment 14;

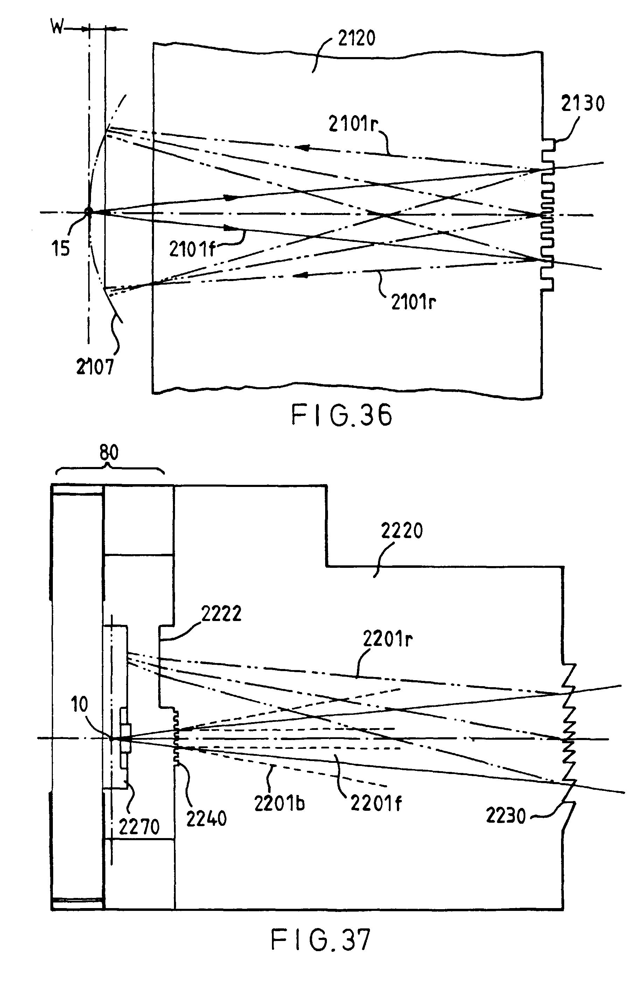

Figure 36 is a schematic diagram which shows bending of the image surface of the optical head in accordance with embodiment 14;

Figure 37 is a side view of an optical head in accordance with embodiment 15;

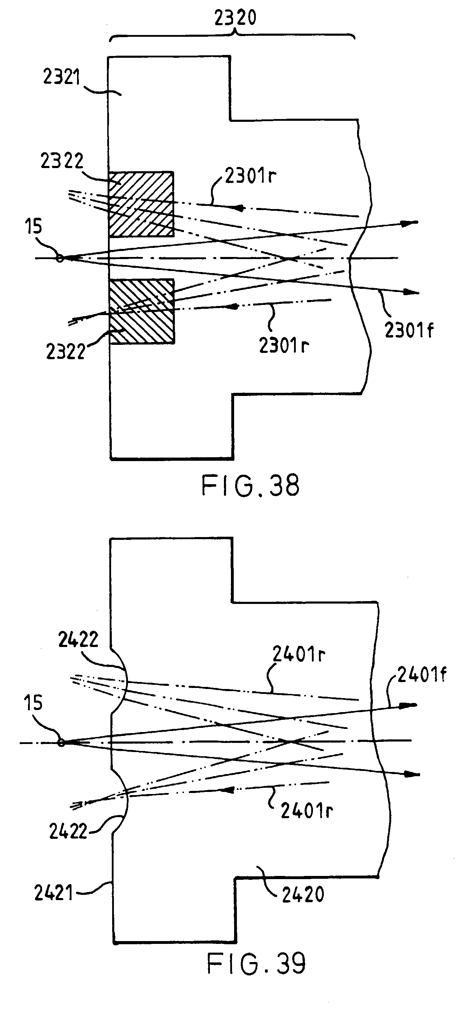

Figure 38 is a side view of an optical element in accordance with embodiment 16;

Figure 39 is a side view of an optical element in accordance with embodiment 17;

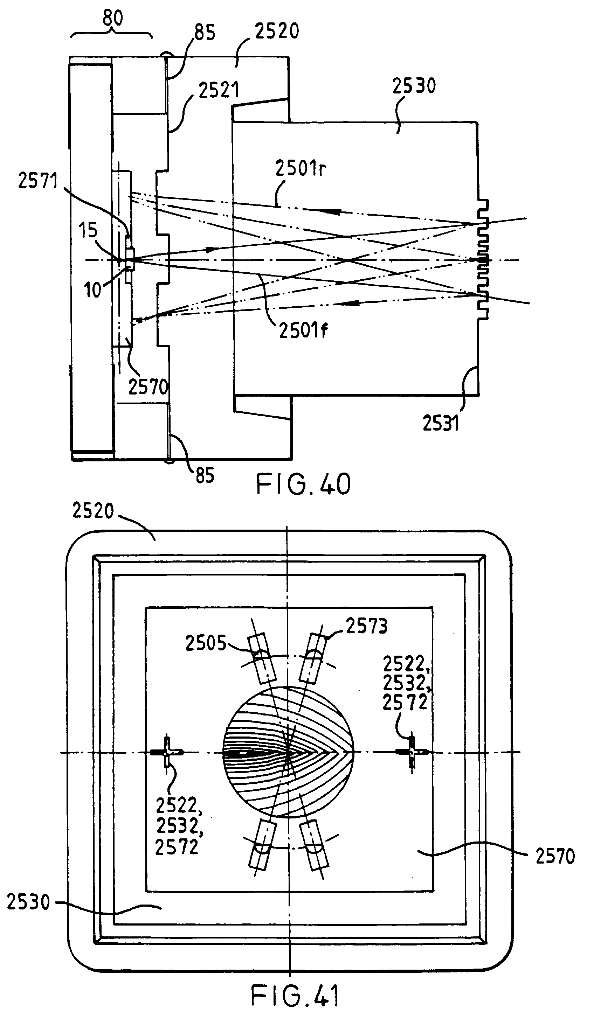

Figure 40 is a side view of an optical head in accordance with embodiment 18;

Figure 41 is a plan view of the optical head in accordance with embodiment 18;

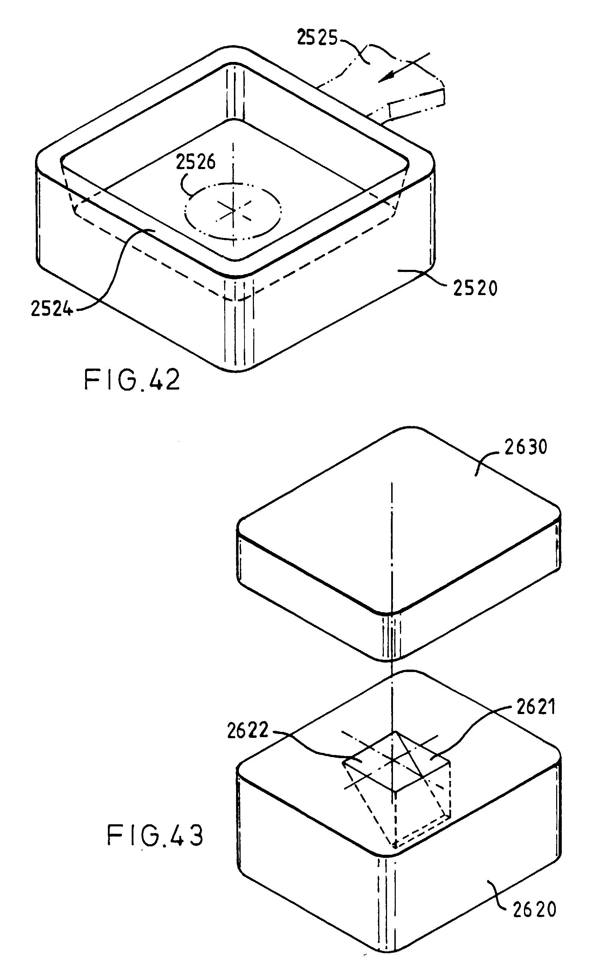

Figure 42 is a perspective view of an optical element in the optical head in accordance with embodiment 18;

Figure 43 is a perspective view of a polariser in accordance with embodiment 19;

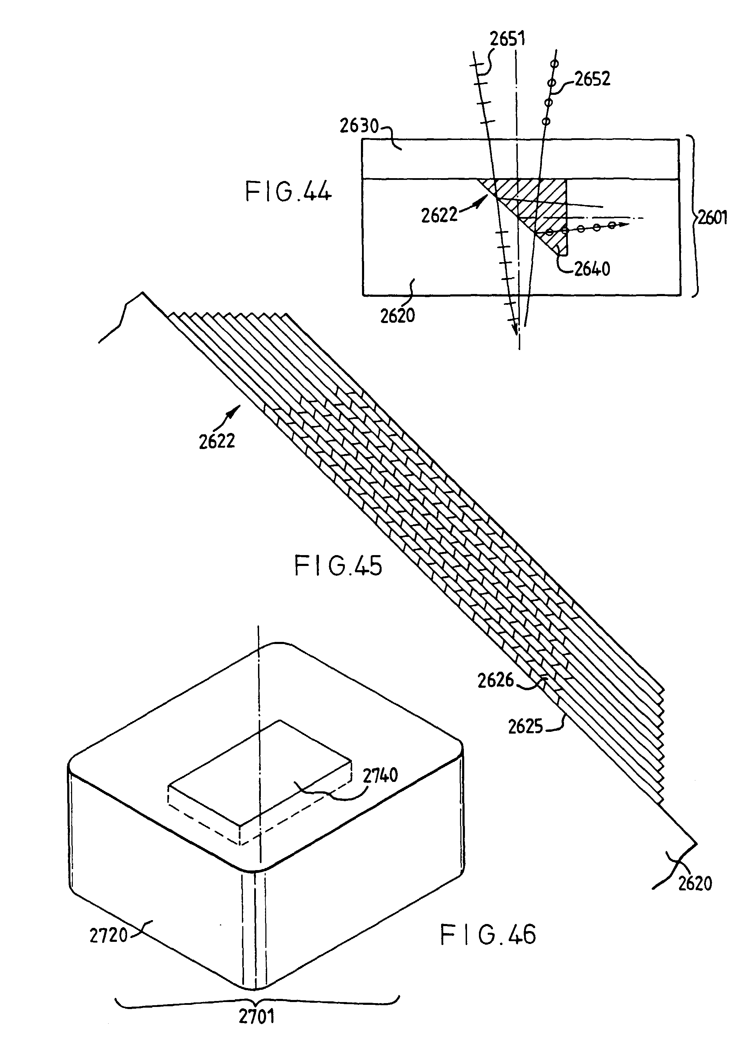

Figure 44 is a cross-sectional view of the polariser in accordance with embodiment 19;

Figure 45 is a cross-sectional view showing a multi-layer thin film of the polariser in accordance with embodiment 19;

Figure 46 is a perspective view of a polariser in accordance with embodiment 20;

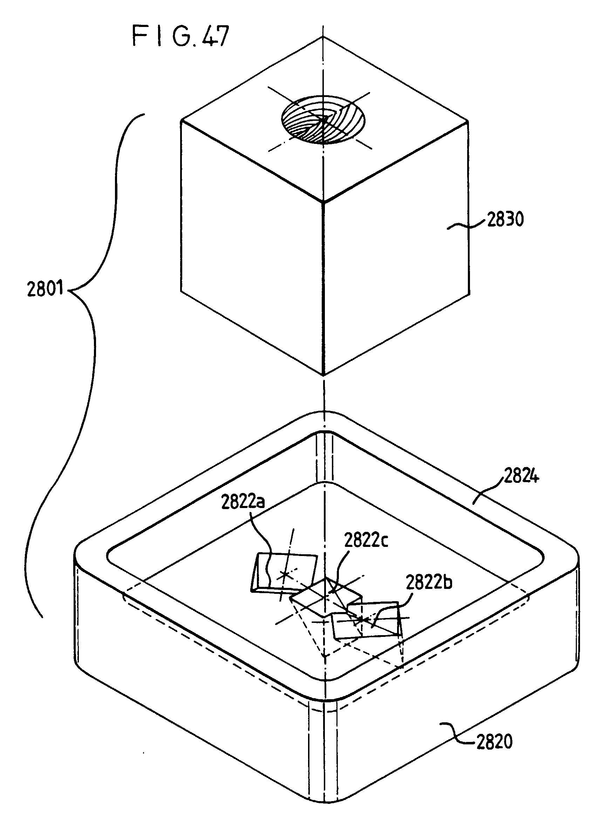

Figure 47 is a perspective view of a polariser of an optical head in accordance with embodiment 21;

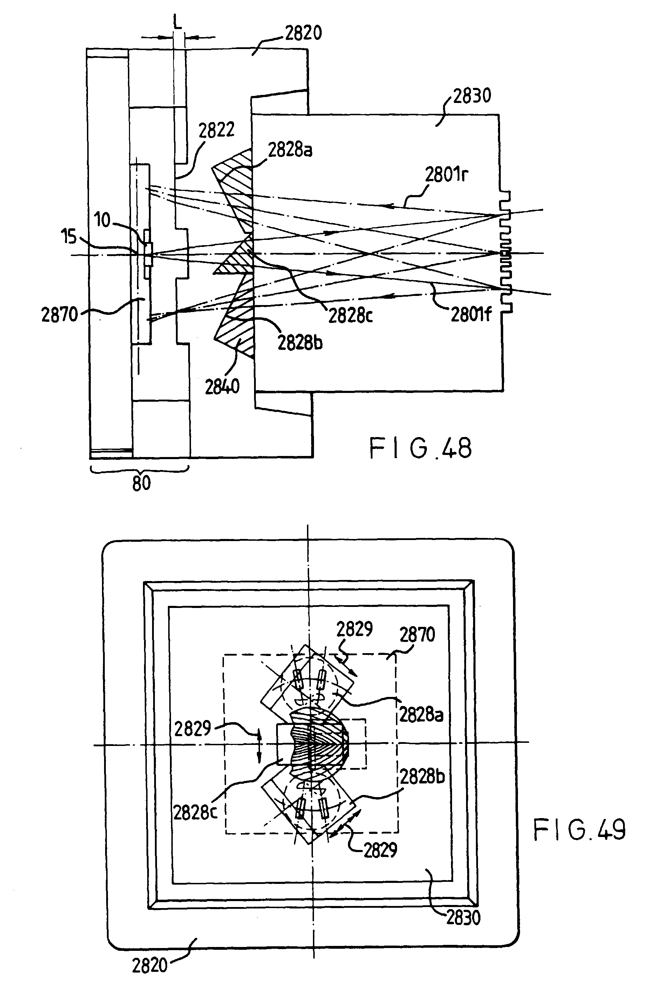

Figure 48 is a side view of the optical head in accordance with embodiment 21;

Figure 49 is a plan view of the optical head in accordance with embodiment 21;

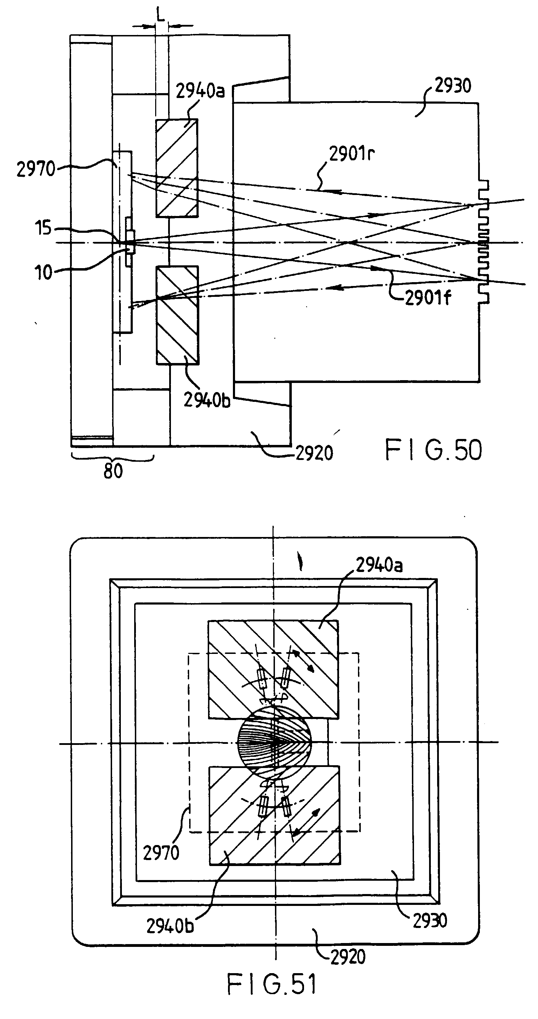

Figure 50 is a side view of an optical head in accordance with embodiment 22;
Figure 51 is a plan view of the optical head in accordance with embodiment 22;

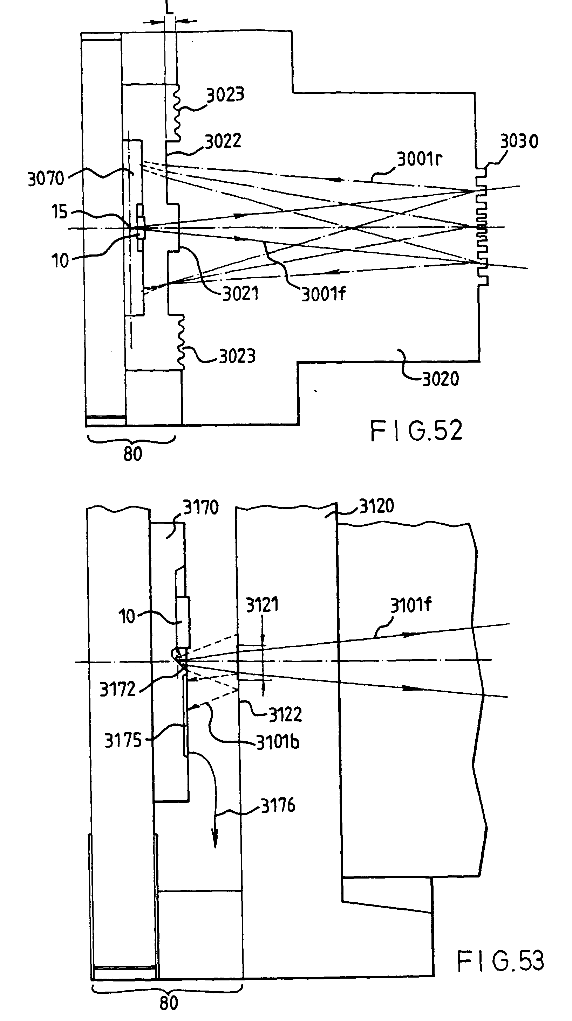

Figure 52 is a side view of an optical head in accordance with embodiment 23; and
Figure 53 is a side view of the optical head in accordance with embodiment 23.

## DESCRIPTION OF THE PREFERRED EMBODIMENTS

Referring to accompanying Figures 1-53, the present invention will now be described in more detail hereinbelow.

(Embodiment 1 - not a part of the invention as claimed)

Figure 1a is a plan view of a polariser in accordance with a first embodiment, which does not form a part of the claimed invention, and Figure 1b is a cross-section view thereof. The polariser has a plurality of edge lines 201 and it has a sawtooth-shaped section as shown in Figure 1b. Preferably, the polariser is formed by means of evaporation to deposit a polarising optical thin film on a transparent substrate 202 made of a plastic sheet with edge lines 201 and by further coating a transparent material 204 such as a transparent resin.

When a light beam 205 is incident on the primary surface, its P-polarization component can pass through the polarizing optical thin film 203, thus it becomes a transmitted light beam 206. On the other hand, the S-polarization component is reflected twice, and then, it becomes a reflected light 207.

The edge lines are arranged at an angle of 45° to the sides of the polarizer so that the transmitted light beam 206 is polarized at 45° relative to the sides of the polarizer. The polarization direction may be an arbitrary value by arranging the edge lines in a desired direction.

The space between the edge lines may be any values less than twice the thickness of the transparent substrate 202.

A preferable material for the transparent substrate 202 is a resin exhibiting transparency for a wavelength of the light to be used, such as an acrylic resin, polycarbonate, amorphous polyolefin, and polystyrene.

The transparent material 204 is a resin exhibiting transparency for a wavelength of the light to be used, such as an ultraviolet-cured resin, epoxy resin, and balsam. With this filling transparent material 204, the direction of the transmitted light beam 206 becomes the same as that of the incident light beam 205.

A mold for producing the polarizer may be made by means of machining when the space between the edge lines is rather wide such as larger than several hundred microns, and by means of photo-etching and blazing when the space between the edge lines is rather narrow for example several ten microns to several microns.

The polarizer produced in such a manner as described above is thin enough and has high transparency. In addition, it shows a large extinction ratio (the ratio of the amount of transmitted light with P-polarization to that of transmitted light with S-polarization). More specifically, it is possible to obtain as high transparency as 98%, and a large extinction ratio such as 500:1. As will be described later, this polarizer may be used as an analyzer in an optical head for detecting a magneto-optical signal. The polarizer may also be applied to a liquid crystal display, an optical shutter, or the like.

(Embodiment 2)

Figure 2 is a plan view of a polarizer in accordance with a second embodiment of the present invention. This polarizer comprises a first substrate 302 having a plurality of edge lines 301 and a second substrate 304 having a plurality of edge lines 303 formed in a different direction from that of the edge lines 301 in the first substrate, these substrate 302 and 303 being injection-molded into a single piece with a resin such as a PMMA resin, a dielectric multi-layer film acting as a polarizing optical thin film being deposited by evaporation on the saw-tooth shaped surface having the edge lines. The polarizer with this configuration may be used in an optical head of a magneto-optic recording device.

With respect to one side of the polarizer taken as reference, the edge lines 301 are arranged at 45° and the edge lines 303 are arranged at -45°. The number of the edge lines may be only one for each substrate. In this case, these substrate have a V-shaped section.

The first and second substrates are not necessarily needed to be arranged adjacent to each other. There may be a space between these substrates as required for a specific construction and these substrate may be connected to each other. Such a construction may be realized by injection molding with plastic.

(Embodiment 3)

Figure 11 is a plan view of a polarizer in accordance with a third embodiment of the present invention. For convenience of illustration, the vertical and horizontal directions are defined as Y- and X-directions, respectively. A substrate 1206 made of a transparent material has regions 1202, 1203, 1204, and 1205 with inclined planes. Light beam 1207, 1208, 1209, and 1210 are incident on these regions, respectively. The polarization direction of the light is set to 45° with respect to the X-axis as designated by an arrow 1201.

Figure 12a is a cross-sectional view of the regions 1202 and 1203, taken in the X-direction. Figure 12b is a cross-sectional view of the regions 1202 and 1203, taken in the Y-direction. As can be seen from these figures, both of the regions 1202 and 1203 have an inclined plane arranged in the same direction, that is, the angle of the inclined plane is 45° with respect to the substrate. A polarizing optical thin film is deposited by evaporation on the inclined plane 1211 and a transparent material 1212 is filled in the space between the inclined plane and the surface of the substrate. On the other hand, as shown in Figures 13a and 13b illustrating cross sections taken in the X-direction and Y-direction, respectively, of the regions 1204 and 1205, these regions 1204 and 1205 have an inclined plane arranged in the direction different by 90° from that of the regions 1202 and 1203, that is to say, in the Y-direction. Both of the regions 1204 and 1205 have an inclined plane in the same direction wherein the angle of these inclined planes is 45° with respect to the substrate. As in the case of the regions 1202 and 1203, a polarizing optical thin film is deposited by evaporation on the inclined plane 1216 and a transparent material 1217 is filled in the space from the inclined plane 1216 up to the surface of the substrate.

With this arrangement, the P-polarization component can pass through the inclined plane 1211 and the S-polarization component is reflected from the inclined plane 1211. As a result, when the light beam 1213 with polarization in the direction 1201 is incident on the regions 1202 and 1203, only its P-polarization component can selectively pass through the inclined plane 1211. In other words, only the X-direction component 1214 of the light polarized in the direction 1201 can pass through the inclined plane 1211.

Similarly, the inclined plane 1216 transmits the P-polarization component and reflects the S-polarization component. Therefore, the inclined planes 1216 transmit only the P-polarization component of the light beam 1218 with polarization in the direction 1201 incident on the regions 1204 and 1205. However, the directions of the inclined planes of these regions 1204 and 1205 are different by 90° from those of the regions 1202 and 1203, thus the only Y-direction component 1219 of the light with polarization in the direction 1201 can pass. In this way, it becomes possible to perform light detection in the directions ±45° via the regions 1202, 1203 and the regions 1204, 1205, respectively.

The direction of the light to be detected can be modified from ±45° into an arbitrary direction by setting the directions of the inclined planes to symmetrical directions such that the absolute values of the angles with respect to the polarization direction are the same. For example, when the light detection is required in the direction of ±A°, it may be arranged such that with respect to the polarization direction the angle between the normal line to the inclined plane and the plane containing the optical axis is +A° for one inclined plane and -A° for the other inclined plane.

The angle between the normal line to the inclined plane and the optical axis of light may be set to an arbitrary value as long as the polarizing thin film formed on the inclined plane may transmit the P-polarization component of the light and may reflect the S-polarization component. Preferably, however, the incidence angle of the light incident on the inclined plane is larger than 20° with respect to the normal line of the inclined plane.

(Embodiment 4)

Figure 14 is a plan view of a polarizer in accordance with a fourth embodiment of the present invention. For convenience of illustration, the vertical and horizontal directions are defined as Y- and X-directions, respectively. A substrate 1304 made of a transparent material has regions 1302 and 1303. Light beams 1305, 1306, and 1307, 1308 are incident on the above mentioned regions, respectively. The polarization direction of the light is set to 45° with respect to the X-axis as designated by an arrow 1301.

Figure 15a is a cross-sectional view of the region 1302, taken in the X-direction. Figure 15b is a cross-sectional view of the region 1302, taken in the Y-direction. As can be seen from these figures, the regions 1202 have an inclined plane arranged in the X-direction, wherein the angle of the inclined plane is set to 45° with respect to the substrate. A polarizing thin film is deposited by evaporation on the inclined plane 1309 and a transparent material 1313 is filled in the space from the inclined plane 1216 up to the surface of the substrate. On the other hand, as shown in Figures 16a and 16b illustrating cross sections of the region 1303, taken in the X-direction and Y-direction, respectively, the region 1303 has an inclined plane arranged in the direction different by 90° from that of the region 1302, that is to say, it is arranged in the Y-direction. Thus, the region 1303 has an inclined plane in the Y-direction and the angle of the inclined plane is set to 45° with respect to the substrate. As in the case of the region 1302, a polarizing thin film is deposited by evaporation on the inclined plane 1314 and a transparent material 1318 is filled in the space from the inclined plane 1314 up to the surface of the substrate.

With this arrangement, the inclined plane 1309 transmits the P-polarization component and reflects the S-polarization component. As a result, when the light beams 1305 and 1306 with polarization in the direction 1301 are incident on the region 1302, only their P-polarization components can selectively pass through the inclined plane 1309. In other words, only the X-direction component 1311 of the light polarized in the direction 1301 can pass through the inclined plane 1309. Similarly, the inclined plane 1314 transmits the P-polarization component and reflects the S-polarization component. Therefore, the inclined plane 1314 transmits selectively only the P-polarization component of the light beams 1307 and 1308 with polarization in the direction 1301 incident on the region 1303. However, the direction of the inclined plane of this region 1303 is different by 90° from that of the region 1302, only the Y-direction component 1316 of the light polarized in the direction 1301 can pass. In this way, the region 1302 and the region 1303 can perform light detection in the directions ±45°, respectively.

The direction of the light detection can be modified from ±45° into an arbitrary direction by setting the directions of the inclined planes to symmetrical directions such that the absolute values of the angles with respect to the polarization direction are the same. For example, when the light detection is required in the direction of ±A°, arrangement may be done such that with respect to the polarization direction the angle between the normal line to the inclined plane and the plane containing the optical axis is +A° for one inclined plane and -A° for the other inclined plane.

The angle between the normal line to the inclined plane and the optical axis of light may be set to an arbitrary value as long as the polarizing thin film formed on the inclined plane may transmit the P-polarization component of the light and may reflect the S-polarization component. Preferably, however, the incidence angle of the light incident on the inclined plane is larger than 20° with respect to the normal line of the inclined plane.

(Embodiment 5)

Figure 3a is a side view of an optical head in accordance with a fifth embodiment of the present invention and Figure 3b is a plan view thereof.

Light is emitted from a semiconductor laser 401 acting as a light source, and this light is reflected from a holographic element 402 on which brazing is performed, and the light reaches a magneto-optical recording medium 404 after passing through an objective lens 403. The light is reflected from the magneto-optical recording medium 404 and passes again through the objective lens 403. Then, the light is diffracted into two directions by the holographic element 402. Thus, the light is split into two directions. As shown in Figure 3b, the holographic element 402 has two regions which are separated from each other by a dividing line 407. Each of these regions produces a light beam, and astigmatism is added by the holographic element 402 to each of these light beams in such a manner that polarities of the added astigmatism are opposite to each other.

The split light beams are detected by a polarizer 405 shown in embodiment 2. Then, photoelectric-conversion is performed on these light beams by a photosensor 406 acting as a light receiving device.

The structure of the photosensor 406 is shown in Figure 4. There are provided six rectangular light receiving regions 501, 502, 503, 504, 505, and 506, wherein the regions 501 and 503 are interconnected to each other, and the regions 504 and 506 are also interconnected to each other. There are also provides four terminals 507, 508, 509, and 510. The polarizer 405 is bonded onto the photosensor 406 via a transparent resin.

The cross section of the resultant unit is shown in Figure 5. It will be seen that the unit is configured by bonding the polarizer 405 onto the photosensor 406 via the transparent resin 601.

Figure 6 shows a relationship between the polarization direction 701 of the light source and directions of the edge lines in the first and second substrates. In this example, 45° is used as the value a. This angle is preferable because this angle provides a maximum modulation amplitude.

Figure 7 shows vertical angles at the top portion 801 and at the bottom portion 802 of the sawtooth-shaped section. In this example, 90° is used as the vertical angle. This angle is preferable because it becomes possible to make the unwanted S-polarization component return back to the incident direction. Thus, little stray light is introduced.

(Embodiment 6)

Figure 17 is a side view of an optical head in accordance with a sixth embodiment of the present invention. A light beam is emitted from a semiconductor laser 1409 acting as a light source and the light beam is incident on a polarizer 1406 shown in the previous embodiments. The light beam passes through a holographic element 1405 which is bonded to the polarizer. Then an objective lens focuses the light beam onto a magneto-optical recording medium 1401. When the holographic element 1405 is bonded to the polarizer 1406, the spaces between the holographic element and the inclined planes in the regions 1418 and 1419 are filled with a transparent resin. With this arrangement, the accuracy of the surfaces through which the light beam passes is determined effectively only by the accuracy of the surface of the holographic element. The light beam focused on the magneto-optical recording medium obtains a magneto-optical signal when it is reflected from the magneto-optical recording medium, and it returns to the objective lens 1402. After passing through the objective lens, the returning light beam is focused along the same path as the optical path 1412 toward the magneto-optical recording medium and incident on the holographic element 1403. The light beam is diffracted by the holographic element, and diffraction of ± first order results in light beams 1413 and 1414, respectively. The light beam 1413 is incident on the region 1418 of the polarizer and the light beam 1414 is incident on the region 1419 of the polarizer. Figure 18 is a plan view of the polarizer 1406. The inclined plane of the region 1418 is arranged such that the plane containing the normal line of the inclined plane and the optical axis makes an angle of +45° with respect to the polarization direction 1415 of the light emitted from the semiconductor laser. On the other hand, the inclined plane of the region 1419 is arranged such that the plane containing the normal line of the inclined plane and the optical axis makes an angle of -45° with respect to the polarization direction 1415 of the light emitted from the semiconductor laser. Furthermore, the same polarizing thin film which transmits a P-polarization component and reflects a S-polarization component is deposited by evaporation on the inclined planes 1418 and 1419. As a result, the transmission directions associated with the P-polarization and S-polarization are such ones designated by reference numerals 1416 and 1417, respectively, for the corresponding regions 1418 and 1419. Thus, these regions 1418 and 1419 can detect the components with polarization of ±45°, respectively, with respect to the polarization direction 1415 of the light emitted from the semiconductor laser. The light beam 1413 passing through the region associated with the detection of polarization of +45° is incident on the light receiving device 1410. On the other hand, the light beam 1414 passing through the region associated with detection of -45° is incident on the light receiving device 1411.

The semiconductor laser 1409 and light receiving devices 1410, 1411 are installed in the same package 1408. These devices are housed with the package 1408 and the optical element wherein the optical element consists of the polarizer 1406 and the holographic element 1405 bonded to each other. This arrangement also acts as protection for the semiconductor laser 1409 and the light receiving devices 1410 and 1411 from environment such as humidity. Both of the light receiving devices 1410 and 1411 are formed on the same silicon chip. Both types of edge-emitting and surface-emitting may be used as a semiconductor laser 1409 to obtain the similar optical head.

(Embodiment 7)

Figure 19 is a side view of an optical head in accordance with a seventh embodiment of the present invention. A light beam is emitted from a semiconductor laser 1409 acting as a light source. The light beam passes through a cover glass 1503 with which a package is sealed, and further passes through a polarizer 1501 which has detector regions 1502 and 1504 on the side facing the semiconductor laser and which has a holographic surface 1505 on the side facing a magneto-optical recording medium. Then, the light beam is focused onto the magneto-optical recording medium 1401 by an objective lens 1402. When the cover glass is bonded to the polarizer 1501, the spaces between the cover glass and the inclined planes in the regions 1502 and 1504 are filled with a transparent adhesive. When the light beam focused on the magneto-optical recording medium is reflected from it, the light beam obtains a magneto-optical signal. Then, the light beam returns to the objective lens 1402. After passing through the objective lens 1402, the returning light beam is focused along the same path as the optical path 1412 toward the magneto-optical recording medium, and incident on the hologram 1505. The light beam is diffracted by the hologram, and diffraction of ± first order results in light beams 1506 and 1507, respectively. The light beam 1506 is incident on the region 1502 of the polarizer and the light beam 1507 is incident on the region 1504 of the polarizer. Figure 20 is a plan view of the composite optical device 1501. The inclined plane of the region 1502 is arranged such that the plane containing the normal line of the inclined plane and the optical axis makes an angle of +45° with respect to the polarization direction 1415 of the light emitted from the semiconductor laser. On the other hand, the inclined plane of the region 1504 is arranged such that the plane containing the normal line of the inclined plane and the optical axis makes an angle of -45° with respect to the polarization direction 1415 of the light emitted from the semiconductor laser. Furthermore, the same polarizing thin film which transmits a P-polarization component and reflects a S-polarization component is deposited by evaporation on the inclined planes 1502 and 1504 As a result, the transmission directions associated with the P-polarization and S-polarization are such ones designated by reference numerals 1508 and 1509, respectively, for the corresponding regions 1502 and 1504. Thus, these regions 1502 and 1504 can detect the components of ±45° polarization, respectively, with respect to the polarization direction 1415 of the light emitted from the semiconductor laser. The light beam 1506 passing through the region associated with detection of polarization of +45° is incident on the light receiving device 1410. On the other hand, the light beam 1507 passing through the region associated with detection of polarization of -45° is incident on the light receiving device 1411. As in embodiment 6, the semiconductor laser 1409 and light receiving devices 1410 and 1411 are installed in the same package 1408. These devices are protected from environment such as humidity by being sealed with the package 1408 and an optical element wherein the optical element comprises the composite optical element 1501 and the cover glass 1503 bonded together.

(Embodiment 8)

Figure 21 is a side view of an optical head in accordance with an eighth embodiment of the present invention. A semiconductor laser 1608 is mounted on a silicon substrate 1605. Photodiodes 1609 and 1610 are formed on the silicon substrate 1605. A light beam emitted from the semiconductor laser 1608 is incident on a substrate 1602 on which a polarizer is formed. The light 1412 emitted from the laser passes through a region 1601. As shown in Figures 23a and 23b illustrating cross sections of the region 1601, taken in the directions parallel to and perpendicular to the polarization direction, respectively, the plane containing the normal line to the inclined plane 1601 and the optical axis coincides with the polarization direction. Thus, the light beam 1412 is incident on the inclined plane 1601 as a light beam with P-polarization. The inclined plane 1601 is coated with a evaporated polarizing thin film so that it transmits the P-polarization component and reflects the S-polarization component. The light beam 1412 emitted from the semiconductor laser is polarized in the direction 1415. Therefore, the light beams 1412 can pass through the regions 1601 with almost no loss. When the holographic element 1405 is bonded to the polarizer 1602, the spaces between the holographic element and the inclined planes in the regions 1601, 1603, and 1604 are filled with a transparent adhesive.

After passing through the holographic element 1405, the light beam 1412 is focused onto the magneto-optical recording medium 1401 by an objective lens 1402. When the light beam focused on the magneto-optical recording medium is reflected from it, the light beam obtains a magneto-optical signal. Then, the light beam returns to the objective lens 1402. After passing through the objective lens 1402, the returning light beam is focused along the same path as the optical path 1412 toward the magneto-optical recording medium, and incident on the hologram 1403. The light beam is diffracted by the hologram, and diffraction of $\pm$ first order results in light beams 1606 and 1607, respectively. The light beam 1606 is incident on the region 1603 of the polarizer and the light beam 1607 is incident on the region 1604 of the polarizer. Figure 22 is a plan view of the polarizer 1602. The inclined plane of the region 1603 is arranged such that the plane containing the normal line of the inclined plane and the optical axis makes an angle of -45° with respect to the polarization direction 1415 of the light emitted from the semiconductor laser. On the other hand, the inclined plane of the region 1604 is arranged such that the plane containing the normal line of the inclined plane and the optical axis makes an angle of +45° with respect to the polarization direction 1415 of the light emitted from the semiconductor laser. Furthermore, the same king of polarizing thin film which transmits the P-polarization component and reflects the S-polarization component is deposited by evaporation on the inclined planes 1601, 1603, and 1604. Due to the same polarizing thin films deposited on the inclined planes 1601, 1603, and 1604, the regions 1603 and 1604 exhibit the transmission directions associated with the P-polarization designated by reference numerals 1611 and 1612, respectively. Thus, these regions 1603 and 1604 can detect the polarization components of $\pm 45°$, respectively, with respect to the polarization direction 1415 of the light emitted from the semiconductor laser. Besides, the regions 1601 can transmit the amount of almost 100% of light emitted from the semiconductor laser. If this arrangement is adopted, during the evaporation process of the polarizing thin film, it is unnecessary to mask the area on which the light beam emitted from the semiconductor laser is to be incident. Thus, a great cost reduction can be achieved.

The light beam 1606 passing through the region for detecting polarization of +45° is incident on the light receiving device 1609. On the other hand, the light beam 1607 passing through the region for detecting polarization of -45° is incident on the light receiving device 1610. The semiconductor laser 1608 and light receiving devices 1609 and 1610 are installed in the same package 1408. These devices are protected from environment such as humidity by being sealed with the package 1408 and the optical element bonded to the polarizer 1602. The light receiving devices 1609 and 1610 are formed on the same silicon wafer, on which the semiconductor laser 1608 is mounted so that the light beam emitted from the semiconductor laser 1608 may come out from the silicon wafer in the direction perpendicular to the silicon wafer after reflected from the inclined plane formed in the silicon wafer. If a surface-emitting type semiconductor laser is used, the light beam emitted from the semiconductor laser can come out from the silicon wafer in the direction perpendicular to the silicon wafer without using a reflection element.

The angle between the incident light and the normal line to the inclined plane covered with a evaporated polarizing thin film may be larger than 45° so as to obtain a polarizer exhibiting a higher extinction ratio.

Conversely, the angle between the incident light and the normal line to the inclined plane covered with a evaporated polarizing thin film may be less than 45° so as to obtain a thinner polarizer, which further leads to a thinner optical head.

(Embodiment 9)

Figure 24 is a plan view of a light receiving device in an optical head in accordance with a ninth embodiment of the present invention. The optical system in this optical head is configured with the optical system shown in embodiment 8. A semiconductor laser 1608 is mounted on a silicon substrate 1605 on which photodiodes 1702, 1703, 1704, 1705, 1706, and 1707 are formed. Reference numerals 1708 and 1709 denote the spots on the sensor illuminated with the light beam detected in the direction of +45° with respect to the polarization direction of the semiconductor laser, wherein the detection of light is performed by a polarizer shown in embodiment 5. Reference numerals 1710 and 1711 denote the spots on the sensor illuminated with the light beam detected in the direction of +45° with respect to the polarization direction of the semiconductor laser.

Figure 25 is a block diagram showing a magneto-optical detection circuit in accordance with this embodiment 9. The current signals from the photodiodes 1702, 1703, 1704, 1705, 1706, and 1707 are converted to voltage signals. The resultant outputs of current-to-voltage conversion associated with the photodiodes 1702, 1703, and 1704 are added to each other by an adder circuit 1709. On the other hand, the resultant outputs of current-to-voltage conversion associated with the photodiodes 1705, 1706, and 1707 are added to each other by an adder circuit 1710. A differential circuit 1711 detects the difference between the output of the adder circuit 1709 and the output of the adder circuit 1710 to obtain a magneto-optical signal 1713. An adder circuit 1712 adds the output of the adder circuit 1709 and the output of the adder circuit 1710 so as to obtain an ROM signal 1714 such as a pre-pit signal.

(Embodiment 10)

Figure 8 shows an optical head in accordance with a tenth embodiment of the present invention.

A light beam is emitted from a semiconductor laser 901 and then it passes through a holographic element 902. Then, the light beam reaches the magneto-optical recording medium 904 after passing through a objective lens 903. The light beam is reflected from the magneto-optical recording medium 904 and passes again through the objective lens 903. Then, the light beam is split into two different directions due to the diffraction by the holographic element 902.

The split light beams pass through polarizers 905 and 906 shown in embodiment 1 and are converted from the optical signals to electric signals by photodiodes 907 and 908.

In this embodiment, preferable directions of the edge lines are +45° and -45° with respect to the polarization direction of the light source.

(Embodiment 11)

Figure 9 is a schematic diagram illustrating a method for producing an optical device in accordance with a eleventh embodiment of the present invention. A mold 1003 heated at a high temperature with a heater 1002 is moved in the direction denoted by the arrow 1004 so as to press a sheet 1001 of a transparent substrate made of PMMA with the mold 1003. Thus, the structure 1005 having a shape of sawtooth is obtained. Then, a thin dielectric film is deposited on it by evaporation.

A glass block may also be used as a transparent substrate. In this case, it is preferable to heat the mold up to a higher temperature than in the case of previous example.

The mold may be made as follows. A pattern is formed on the mold by means of machining with a grinder or by means of photo-etching. Then, inclined planes are formed by means of blazing. In the production of the mold, it is preferable to use machining when the space between the edge lines is larger than 100 μm and the photo-etching is preferable when the space is less than 100 μm.

(Embodiment 12)

Figure 10 is a schematic diagram illustrating another method for producing an optical device in accordance with a twelfth embodiment of the present invention. A roller 1102 having a sawtooth-shaped surface is pressed onto a transparent substrate of a plastic film 1101 and the roller 1102 is rotated on the plastic film 1101 so as to transfer the sawtooth structure to the film 1101. In this embodiment, it is possible to produce two types of edge lines extending in different directions in one process. The roller may be heated as required. Then, a multi-layer dielectric thin film acting as a polarizing optical thin film is formed by evaporation on the plastic film 1101. Then, the plastic film is cut into a polarizer. The roller may be made by directly machining a metal cylinder so as to form a saw-toothed structure on its surface, or otherwise, after forming a saw-toothed structure on the surface of a flat plate, the roller may be obtained by wrapping the flat plate around a cylinder.

(Embodiment 13)

Figure 26 is a schematic diagram illustrating a method for producing an optical device by plastic injection molding in accordance with a thirteenth embodiment of the present invention. First, metal molds 1801 and 1802 are prepared which define the shape of a polarizer having inclined planes. Then, a melted resin is injected with a pressure through a gate 1803 into the molds. After the melted resin which was injected into the mold and fills the inside of the molds is cooled and becomes hard, the molds 1801 and 1802 are removed. Then, the gate portion is cut off. Thus, the structure of a polarizer in accordance with the present invention is obtained. A multi-layer dielectric thin film acting as a polarizing optical thin film is deposited by evaporation on the surface 1804 having the inclined planes. Furthermore, the spaces adjacent to the inclined planes are filled with a transparent resin having a refractive index approximately the same as that of the injected resin. In this way, a complete polarizer in accordance with the present invention can be obtained. Alternatively, glass may also by used as a material to be injected into the molds to obtain a similar structure.

(Embodiment 14)

Figure 27 is a side view of an optical head in accordance with a fourteenth embodiment of the present invention, and Figure 28 is a side view of a pickup configured with this optical head. In Figure 27, reference numeral 10 denotes a light emitting device consisting of a semiconductor laser acting as a light source of the optical head. Reference numeral 2120 denotes an optical element called a cover plate. Reference numerals 2130 and 2170 denote a hologram comprising a curved diffraction grating, and a light receiving device consisting of a multi-divided photodiode, respectively. Reference numeral 80 denotes a package for containing and holding the light emitting device 10 and the light receiving device 2170. The package 80 consists of a case having an aperture on one side and this aperture is covered and sealed with the optical element 2120. All these elements are combined into one body to form an optical head 1 in accordance with this embodiment. Thus, in this optical head 1, a light source and an optical system for detection are formed into the shape of a cubic body as small as about $5 \times 5 \times 5$ mm$^3$ and different functions are also combined as will be described later in more detail.

In Figure 28, reference numeral 2 denotes a case of the optical pick-up within which the optical head 1 described above is contained. In addition, a mirror 40, and an objective lens 50 are also contained in the case 2 so that the whole elements are driven in an integral fashion (in operation of servo-focusing and servo-tracking and the like). The objective lens 50 is only one lens included in the pick-up, thus achieving an optical system with a finite compact configuration. More specifically, the distance between the object and the image (total track) of the objective lens 50 is as small as about 15 mm. As a result, the size and weight reductions of the case 2 are achieved. With this embodiment, it is possible to obtain an optical pick-up having a light weight such as 2 g as a whole. Reference numeral 60 denotes a optical recording medium or optical disk which has grooved tracks (not shown) with a small pitch on its recording surface.

In Figure 27, the optical element 2120 called a cover plate has a step L formed on the surface near the light emitting device 10, thus dividing the surface area into a flat area 2121 and a stepped area 2122. This optical element 2120 may be easily made by injection-molding of an optical resin such as PMMA (poly methyl methacrylate), PC (polycarbonate), and APO (amorphous polyolefin), or otherwise, it may be made by pressing low-melting glass at a high temperature.

In practical processing, it is impossible to mount the light emitting device 10 in a perfect fashion such that the surface of the light emitting device 10 exists exactly in the same plane as the light receiving plane, that is the surface of the light receiving device 2170. This is because of the fact that in semiconductor fabrication processing for producing the light receiving device 2170, a semiconductor wafer is diced into a small size, which leads to a difficulty to make a through-hole at a central portion of the chip. It might be one way to mount the light emitting device 10 on the light receiving device 2170. However, in this case, because both of the surface 11 of the light emitting device 10 via which the light is emitted (see Figure 30) and the opposite surface 12 act as boundary faces for internal reflection in laser operation, these surfaces are not allowed to be in contact with the light receiving device 2170 or the like. Thus, it is needed that the light emitting device 10 is fixed via the bottom surface 14 as shown in Figure 30. In this embodiment, to minimize the number of parts, there are provided a recess 2171 and a inclined plane 2172 at nearly the central portion of the light receiving device 2170 and the light emitting device 10 is mounted in the recess 2171 in the horizontal position so that the light beam 2100 emitted via the light emitting face 11 is reflected from the inclined plane 2172 thus providing a divergent light beam 2101a emerging in the direction perpendicular to the surface of the light receiving device 2170, as shown in Figure 29 or 30. The inclined plane 2172 is inclined approximately at 45°. The recess 2171 and the inclined plane 2172 may be rather readily formed in the light receiving device 2170 made of a silicon substrate by anisotropic etching. Gold thin film may be deposited by evaporation on the inclined plane 2172 so as to obtain a reflecting plane exhibiting a high reflection factor.

Here, it should be noted that when the light emitting device 10, that is a laser chip, is mounted in such a manner described above, the virtual light emitting point which is the mirror image of the real light emitting point of the light emitting device 10 about the inclined plane 2172 formed in the light receiving device 2170 lies at the position apart downward (to the left in Figure 30) from the light receiving surface of the light receiving device 2170, as shown in Figure 30. At present, the technology of the surface-emitting semiconductor laser has not been established well yet. Thus, it is impossible to produce both of a light emitting device and a light receiving device on the same chip in a full monolithic fashion by using successive fabrication processes. Considering the above fact, it is the best way at present to mount a laser chip acting as a light emitting device 10 which has been fabricated separately on a light receiving device 2170 such that the inclined plane 2172 reflects light so as to yield a light beam 2101f in the direction perpendicular to the plane of the light receiving device. In this case, the virtual light emitting point 15 exists at a location apart downward from the light receiving device 2170 by for example 0.08 mm.

If a certain increase in the number of parts is allowed, a stem (a rectangular metal block, not shown), for example, may be attached to the surface of the light receiving device 2170 and the light emitting device 10 may be mounted on the side of the stem such that the light emitting device 10 may be in parallel to the side of the stem (that is to say, perpendicular to the light receiving device 2170). In this case, the light emitting point (not shown) of the light emitting device 10 lies at the position apart upward from the light receiving device. In any case, the light emitting point deviates slightly either downward or upward from the light receiving surface of the light receiving device 2170.

Referring back to Figures 27 and 28, optical behaviors in the optical head in accordance with this embodiment 14 will be described hereinbelow. The forward light beam 2101f that is a divergence light beam emitted from the light emitting device 10 is incident on nearly the central portion that is the flat area 2121 of the light element 2120 and then the light beam passes through it to come out from the hologram 2130 formed on the surface of the optical element 2120. The light 2102f of zero order (the light not diffracted by the hologram 2130) is incident on the mirror 40 and the objective lens 50. The objective lens 50 focuses the light beam 2103f to form an image of a spot 61 on the recording surface of the optical recording medium 60. The light beam 2103r reflected from the optical recording medium 60 travels along the reverse path. Thus, it becomes a light beam 2102r and it is incident on the hologram 2130. The returning light beams 2101r, that is to say diffracted light beams of the +/- first order, pass through the inside of the optical element 2120 and come out from it at the stepped areas 2122. Then, the light beams 2101r are incident on the light receiving surface, that is the surface of the light receiving device 2170.

As shown in Figures 31 and 32, the hologram 2130 is divided into two regions corresponding to the radial direction of the optical recording medium 60 that is to say the direction perpendicular to the grooved tracks, or in other words, the direction of push-pull modulation. Two kinds of holographic patterns 2130a and 2130b each yield two diffracted light beams of the +/- first order, thus, in total, the light beam is split into four diffracted returning light beams 2101r. In addition, the hologram pattern is designed so that a large amount of astigmatism occurs. As shown in Figure 33, the light receiving device 2170 has light receiving patterns 2173 consisting of four separate strip areas formed by semiconductor fabrication processes. The light beams 2101r are each focused to form the receiving light spots 2105 on the respective light receiving patterns 2173. Because of the astigmatism described above, the shapes of these receiving spots 2105 vary depending on the focusing errors. Correspondingly, variations occur in the amounts of the light beams which are contained within the receiving patterns 2173.

In this embodiment, these variations in the amounts of the light are converted from optical signals to electric signals to obtain a focusing error signal (that is called as astigmatism method), and a tracking error signal is obtained by performing optical-to-electric signal conversion with respect to the difference between the amount of a light beam passing through the pattern 2130a and that passing through the pattern 2130b, wherein these patterns 2130a and 2130b are a half pattern of the hologram 2130 (what is called a push-pull method).

Referring to Figure 32, in the normal state in which the focusing error is zero, adjustment should be done such that the returning light beam 2101r illuminating the light receiving device 2170 may fall at the center of the astigmatic difference D (distance between focal lines), in other words, the returning light beam 2101r should be fall at the circle of least confusion 2103. If adjustment is done in such a manner, the astigmatic difference D is located equally about the position of the circle of least confusion 2103 as shown in Figure 32. As a result, when the focusing error is in the normal state, the returning light beam 2101r forms receiving spots 2105 having the shape of the circle of least confusion as shown in Figure 32 or 34b, and thus the same amount of light is sensed by each of channels 2173a-2173d. In this situation, the focusing error signal given by

$$(2173a - 2173c) + (2173d - 2173b)$$

$$= (2173a + 2173d) - (2173b + 2173c)$$

will be zero. If the distance between the optical recording medium 60 and the objective lens 50 changes and thus if the focusing error increases, the focusing of the returning light beams 2101r changes on the principle of geometrical optics, thus resulting in shifts of the focal lines 2104 toward the optical axis. Then, as shown in Figure 34a or 34c, the shapes of the receiving light spots 2105 change to an ellipse and thus the sensed amounts of light associated with the receiving light patterns 2173 change. As a result, change occurs in the level of the focusing error signal 2106. When describing astigmatic difference and magnification (lateral magnification: image side/object side) of the objective lens 50 by D and R, respectively, the focusing error represented by a distance d is given by

$$d = D * (R * R)/2$$

for the region where the focusing error varies monotonically. Thus, the focusing error signal 2106 changes as shown by the curve in Figure 35. In this embodiment, taking into account ease in processing of the objective lens 50 and a desirable distance between the object and the image, a preferable magnification of the objective lens 50 is about 1/4. In this case, the above equation becomes

$$d = D/32$$

The focusing error signal 2106 discussed above and the tracking error signal described earlier are used as error signals for servo-focusing and servo-tracking, respectively, so as to focus the spot 61 accurately on the optical recording medium 60. To perform accurate control in servo-focusing, it is essentially important that in the normal state the focusing error signal 2106 should be zero, or in other words, there should be no initial offset in the focusing error signal 2106. However, because the servo-system itself is not essential part of the present invention, more detailed description will not be given hereinbelow.

As described earlier, in this embodiment, the optical system forms a finite system, and thus, as shown in Figures 27 and 28, there exists a relationship of optical conjugate between the virtual light emitting point 15 and the focal point (the location of the spot 61) of the objective lens 50. In addition, there exists a relationship of optical conjugate between the focal point of the objective lens 50 and the focal point of the returning light beam 2101r, that is the circle of least confusion 2103 in this case. As a result, there also exists a relationship of optical conjugate between the virtual light emitting point 15 and the circle of least confusion 2103. Here, if it is possible to locate both of the virtual light emitting point 15 and the circle of least confusion 2103 in the same plane in the direction of the optical axis, then it is assured that there occurs no offset in the focusing error signal 2106 because the light receiving spot on the light receiving device 2170 becomes the same as the circle of least confusion 2103 in shape.

However, as described above referring to Figure 30, the virtual light emitting point 15 lies behind the light receiving plane of the light receiving device 2170 by about 0.08 mm. Furthermore, as shown in Figure 36, due to aberration in geometrical optics associated with the objective lens 50 and the hologram 2130, bending in forward direction (toward the optical element 2120) occurs in the image surface 2107 (which can be considered to be a plane containing the circle of least confusion 2103) formed with light of the +/- first order yielded by the hologram 2130. Because of this, it is possible to perform automatic compensation of the deviation of the virtual light emitting point 15 to a certain degree. However, under practical limited condition, it is difficult to design the optical system such that the amount of bending of the image surface (denoted by W in Figure 36) corresponds to the deviation of the virtual light emitting point 15. While there exists the deviation of 0.08 mm, the amount of bending W of the image surface is, for example, as large as 0.13 mm, which leads to overcompensation. In this case, there exists residual deviation of 0.05 mm, which can give the offset of as large as about 1.6 $\mu$m in the focusing error signal 2106.

Therefore, if nothing is further done, there occurs initial offset in the focusing error signal 2106. To solve this problem, the present embodiment provides a step on the surface of the optical element 2120 called a cover plate as described earlier as to adjust the optical length. This is a very simple method to solve the above problem, which is one of the characteristic features of the present invention. The step L between the surface 2121 and the surface 2122 is given by

$$L = n\Delta s/(n-1) = 1.5 * 0.05/(1.5 -1)$$

where $\Delta s$ is an optical length to be compensated (0.13 mm - 0.08 mm = 0.05 mm) and n (= 1.5) is the refractive index of the optical element 2120. Therefore, if L is made to be 0.15 mm, then the position error is corrected in the direction of the optical axis between the virtual light emitting point 15 and the light receiving device 2170 . Thus, the initial offset in the focusing error signal 2106 is cancelled.

The present embodiment has a great advantage that no process is required for adjustment of the initial offset in the focusing error signal. The step described above is formed by directly transferring the step in the mold. Therefore, the accuracy of the L is determined by the accuracy of the mold and it is easy to obtain accuracy better than a required dimensional tolerance +/- 10 $\mu$m. The equivalent value of the deviation of the image surface associated with the returning light beam 2101r relative to the virtual light emitting point 15 corresponding to the above dimensional tolerance is given by

$$\Delta s = L * (n - 1) / n = 10 \ \mu m * (1.5 -1) / 1.5$$

Thus, we can obtain $\Delta s = 3.3 \ \mu$m. This value of $\Delta s$ can be further converted to the corresponding focusing error, that is the initial offset as follows: 3.3/32 = 0.1 $\mu$m. This means that the generally required tolerance in the offset (less than about 1$\mu$m) can be easily satisfied. Thus, it is possible to delete the adjustment process with no problem.

In the example described above, the surface 2121 is made higher than the surface 2122 by step L, which means that the optical length of the returning path is longer compared to the optical path in the forward direction. However, in the case where there exists only a small amount of bending in the image surface associated with the returning light beam 2101r (for example, in the case where diffraction angle of the hologram is small), the optical length of the returning path of the light beam 2101r should be made less than that of forward path as opposed to the above case. This can be achieved by forming the step such that the surface 2122 is recessed with respect to the surface 2121.

In the above example, the detection of the focusing error signal 2106 is done by what is called an astigmatism method. However, application of the present invention is not limited to this method. For example, in a method using the focusing error detection such as a spot size method, similar problems can occur. Therefore, the problems which has been discussed above are inherent for optical heads which are configured with one package 80 containing both of a light emitting device 10 and light receiving device 2170. Therefore, the present invention or the present embodiment can be applied to a variety of optical heads of this type. The optical element 2120 may also be produced by bonding separate optical parts into one body such that there exists a step L on its surface instead of using molding process. However, in this case, dimensional accuracy is slightly degraded.

In the above example, the main purpose of the optical element 2120 is to achieve the different optical length between the forward path of the light beam 2101f and the returning path of the light beam 2101r. However, the basic idea of the present embodiment is in that in an optical element through which a plurality of light beams pass, each optical length is established independently of each other. Therefore, the fields to which the present invention is applicable can be expanded to any apparatus other than optical heads including an optical system in which there exist a plurality of convergence or divergence light beams passing near each other.

(Embodiment 15)

Figure 37 is a side view of an optical head in accordance with a fifteenth embodiment of the present invention. The optical system for use in this embodiment is basically similar to that in the previous embodiment except that a hologram 2230 formed on one surface of an optical element 2220 is a blazed hologram whose section taken in the direction across the diffraction grooves has a shape of small sawtooth-like triangles and except that a diffraction grating 2240 consisting of simple straight line grooves is formed on the other surface of the optical element 2220.

Because the hologram 2230 is blazed, diffracted light of the first order, that is a returning optical beam 2201r is produced only one side as is well known. Therefore, it is impossible to obtain a focusing error signal by means of differential detection using astigmatism as in embodiment 15. Instead, a known double knife-edge method (or Foucault method) may be used to obtain a focusing error signal (more detailed explanation will not given). The tracking error signal may be obtained by means of a known 3-beam method using light of the +/- first order generated by the grating 2240.

In this embodiment, as described above, the number of the diffracted light beams generated by the hologram 2230 is half that in the case of embodiment 1. As a result, the light receiving patterns (not shown) on the light receiving device 2270 can be arranged on one side only. Thus, it is possible to make further size reduction of a light receiving device 2270 and a package 80. In addition, because the grating 2240 can be formed on the optical element 2220 in an integral form, advanced functional integration can be achieved. Therefore, it becomes possible to provide an extremely small sized optical head with simple functions, for example an optical head for only reproduction of a CD (compact disk). Referring to Figure 37, the stepped area 2222 is formed on the optical element 2220 so as to adjust the optical length of the returning light beam 2201f (diffraction light of the first order) so that the initial offset in the focusing error signal can be cancelled.

(Embodiment 16)

In embodiment 14 described earlier, the optical element 2120 having the step L is used to correct the deviation in the optical axis between the virtual light emitting point 15 and the circle of least confusion 2103 of the returning light beam 1201r. However, the correction of the optical path is also possible by an alternative method.

In a sixteenth embodiment shown in Figure 38 is characterized in that modification of the optical path is achieved by partially varying the refractive index. That is, an optical element 2320 partially contains a material B (2322) which is dirrerent from a material A (2321) of the potion around the material B. This configuration can be achieved for example by so-called two-color molding using two-step injection molding. For example, first, the material B (2322) is injection-molded by using a small mold. Then, a part of mold is exchanged and the material A (2321) is injection-molded around the material B. Preferable materials are PMMA (refractive index of about 1.5) for the material A and PC (refractive index of about 1.6) for the material B. In this case, unlike embodiment 15, abrupt change in the refractive index such as that between a resin and air is not used. As a result, a rather long range of difference in refractive index is required along the optical axis. The length L of the portion having different refractive index can be written as

$$L = nB * \Delta s / (nB - nA)$$

$$= 1.6 * 0.05 / (1.6 - 1.5)$$

where nA is the refractive index of the material A, nB is the refractive index of the material B, and $\Delta s$ is the optical length to be compensated. In this case, the correction of the optical path can be achieved by letting L = 0.75 mm. The refractive index is inherent for the material and it can be controlled very accurately. This leads to an advantage that the optical path can be adjusted more accurately compared to the embodiment 14 or 15.

In stead of the configuration in which the material B (2322) is molded such that the end face of the material B (2322) forms the same surface as that of the material A as shown in Figure 38, the material B may be fully contained within the material A. Furthermore, instead of the two-color molding described above, the optical element 2320 may be produced by means of fitting of a separate part having a different refractive index. However, this method is slightly disadvantageous in respect to dimensional accuracy. If it is allowed to use materials other than resins, it is also possible to partially change the refractive index by meas of ion doping or the like as in the case of a graded-index lens (so-called GRIN lens).

(Embodiment 17)

An seventeenth embodiment provides another method for compensating the optical length. Referring to Figure 39, lens surfaces 2422 are partially formed on the surface 2421 of an optical element 2420. In this case, instead of utilizing difference in diffractive index as in the previous embodiments, refraction due to the lens is used to change the focal distance, that is to say, to shift the focal point. Concave-lens surfaces may be formed so as to extend the optical length of a light beam, and convex-lens surfaces may be formed so as to shorten the optical length. When this embodiment is applied to an optical head as in embodiment 14, it is preferable to adopt an aspheric surface for the lens surfaces 2422 so as to avoid unwanted aberration in the light beams.

(Embodiment 18)

Figures 40 and 41 shows another type of optical head having a cover plate or an optical element 2520 in accordance with an eighteenth embodiment of the present invention. This embodiment is based on the same principle of the optical system as that of embodiment 14 described earlier except that the optical element 2520 has a different shape and except that a holographic element 2530 is provided separately from the optical element 2520.

There are provided a plurality of alignment marks 2522, 2532, 2572 on the back surface 2521 of the optical element 2520, the surface 2531 of the holographic element 2520, and the surface of a light receiving device 2570 wherein these alignment marks are located at the corresponding positions on the surfaces (Figure 41). These alignment marks are formed in the shape of a cross having a width of about 10 µm by meas of etching or engraving with a mold, and these are used to make positioning in an assembling process. In this type of optical head, each receiving light spot 2505, corresponding to each channel, of the light receiving pattern 2573 of the light receiving device 2570 should have horizontal position accuracy better than about 10% with respect to the diameter of the receiving light spot 2505 (that is the circle of least confusion). For example, when the diameter of the receiving light spot 2505 is about 150 µm, positioning should be done with accuracy of +/- 15 µm. The alignment marks (2522, 2532, 2572) can be formed with tolerance in position of about +/- 5 µm with respect to each part if etching with a photo mask is used. Therefore, by watching these alignment marks in the direction of the optical axis, one can align these alignment marks so that the receiving light spots 2505 are positioned with accuracy about +/- 10 µm relative to the light receiving pattern 2573.

Now, a method for assembling an optical head in accordance with this embodiment will be described hereinbelow. Referring to Figure 40, the light receiving device 2570 and a laser chip acting as a light emitting device 10 mounted in the recess 2571 on the light receiving device 2570 are fixed to the inside of the package frame 80. Fixing if these devices is usually performed by means of bonding with a silver-filled adhesive. The outer shape of the section of the package 80, taken in the horizontal direction, is the same as that of the optical element 2520. The aperture face of the package 80 has good flatness. A small amount of adhesive 85 is coated on the aperture face of the package 80. Then, the optical element 2520 is put on the aperture face of the package 80 and the above-mentioned alignment marks 2522 are positioned accurately with respect to the corresponding alignment marks 2572 using an X-Y-θ table. Then, the adhesive 85 is cured.

In this embodiment, a preferable adhesive 85 is an acrylic-based UV (ultraviolet)-hardening resin, which leads to good workability. Preferable, the adhesive should be such a one whose hardness after cured is much softer than that of the optical element 2570 and the package 80. In general, an epoxy resin or ceramic is preferable used for the package 80 which needs mold for metal interconnections. On the other hand, the optical element 2520 is made of an optical resin such as PMMA as described in connection with the embodiment 15. However, these materials are different from each other in coefficient of thermal expansion by one order or more. If these material are tight bonded to each other, stress is induced in the optical element 2520 due to variations in temperature, and optical characteristics such as transmission wave front aberration and birefringence are degraded. Therefore, it is needed to use a very soft material as the adhesive 85 for bonding these members to each other so as to absorb the difference in coefficient of thermal expansion. It has been found experimentally that if after cured the adhesive has hardness about 60 in Shore A-scale hardness, almost no optical stress is induced in the optical element 2520. This hardness is in a very low range which can obtained as hardness of common adhesives after cured, and it is lower by one order or more compared to that of the material (PMMA or PC) of the optical element 2520.

Figure 42 shows the appearance of the optical element 2520 as separated. The optical element 2520 has a square-shaped bottom face of $5 \times 5$ mm$^2$, and has a flange 2524 at its peripheral. Preferably, the optical element 2520 may be made by injection molding with a mold of a side gate type wherein the mold has a gate 2525 formed on the outer side of the flange 2524, and the gate 2525 is used as an inlet through which a resin is injected in an injection-molding process.

The purposes of the flange 2524 are to increase the rigidity of as a whole and to make the pressure of the resin uniform when the resin is injected through the gate 2525 of the mold of a side gate type. In the optical head of this embodiment, the effective area in the optical element 2520 wherein the effective area has to satisfy the requirement with respect to the optical characteristics is a central portion within a diameter of about 2 mm. If optical stress is induced in this central portion 2526, the optical characteristics such as transmission wave front aberration and birefringence are degraded, and thus significant degradation occurs in reliability of the optical head in recording and reproducing of information. In this embodiment, because the flange 2524 is provided at periphery, the rigidity is extremely increased to external force and thermal deformation, and thus the stress which would otherwise be induced in the central portion 2526 is extremely relaxed. In addition, in the injection molding process, the flange 2524 makes fluid pressure of the resin relaxed and uniform and thus it becomes possible to make residual stress in the central portion 2526 nearly zero after injection-molded. This leads to improvement in optical characteristics.

(Embodiment 19)

Figure 43 shows a polarizer in accordance with a nineteenth embodiment of the present invention. This polarizer is intended to be used in an optical head of a magneto-optical disk device in which reproduction of magneto-optical signal is required. The primary object of this embodiment is to provide a simplified method of producing a polarizer for detecting magneto-optical signals, wherein this object is achieved by a method absolute different from conventional ones.
Referring to Figures 43, 44, and 45, this embodiment will be described hereinbelow.
Referring to Figure 43, a first optical element 2620 has a recess 2621 at a central region and has an inclined plane 2622 at an angle about 45°. This first optical element 2620 is made of an optical resin such as PMMA (poly methyl methacrylate) by injection molding into an integral form. This method allows production of a large number of optical elements at a low cost. A second optical element 2630 is a flat plate with parallel surfaces. Because this second optical element 2630 includes neither a curved surface nor an inclined surface, it can be made by means of normal cutting of optical glass. Thus, it is also possible to provide a large number of second optical elements at a low cost.
Figure 44 shows how these first and second optical elements 2620 and 2630 are combined with each other to form a polarizer 2601. The recess 2621 of the first optical element 2620 is filled with a resin 2640 and then the first optical element 2620 is covered with the second optical element 2630. The chemical composition of the resin 2640 is preferably adjusted so that, after cured, it may have a refractive index of about 1.5 which is similar to that of the first and second optical elements. In a situation where the first and second optical elements combined into a single piece, the resin 2640 filled in the recess 2621 acts as a triangular prism. A preferable resin 2640 for use in this embodiment is a UV (ultraviolet)-hardening resin and it is cured by UV irradiation after the optical elements are combined. However, this does not limit the present invention. Alternatively, a thermosetting resin or the like may also be used.
As shown in Figure 45, a multi-layer dielectric thin film is coated (by means of evaporation) either on the inclined plane 2622 or on the whole area of the first optical element 2620, wherein the multi-layer dielectric thin film consists of dielectric layers A (2625) and dielectric layers B (2626) which are deposited alternately one on another. This evaporation method is commonly known as multi-coating. In view of the fact that a resin (it is assumed that PMMA is used in this embodiment) used as a substrate material, that is the first optical element 2620, has a very low thermal deformation temperature such as 110°C which is extremely lower than that of glass, it is preferable that the substrate temperature is kept less than 100°C during the evaporation process. Because, the resin has a large thermal expansion coefficient, it is required to carefully select evaporation materials so as to avoid cracking due to the strain introduced by the stress between the evaporated material and the substrate. An example of preferable materials is as follows:

Dielectric A: $MgF_2$ (magnesium fluoride), Refractive index = 1.4
Dielectric B: ZnS (zinc sulfide), Refractive index = 2.2

These dielectrics are alternately deposited with thickness of 0.3-0.4 $\lambda$ ($\lambda$ is a wavelength of light to be used, which is about 780 nm) for each layer so that the sum of the differences in transmission ratio at each interface with respect to P-polarization or S-polarization components results in desired polarization transmission characteristics as a whole.
With this arrangement, the portion filled with the resin 2640 as shown in Figure 44 and the first optical element 2620 act as a so-called polarizing beam splitter via the multi-layer thin film (2625, 2626). It has been found experimentally that the optimized total number of the deposited thin layers including both of dielectrics A and B is in the range of 10 to 20 including. Under this condition, it is possible to obtain 500:1 as an extinction ratio, that is the ratio of the transmission ratio associated with S-polarization to the transmission ratio associated with P-polarization.
The combination of deposited materials shown above is just one example which shows neither cracking nor variations in characteristics with the variation of temperature. Thus, it is possible to obtain a polarizer 2601 with these materials, which can be used in practical applications. However, to ensure that large enough extinction ratio may be obtained, it is required that after assembling there occurs no birefringence due to the residual stress in the resin 2640. Therefore, in this embodiment, annealing is carried out at the end of the production processes so as to remove the residual stress in the resin 2640. An example of preferable annealing condition is for 1 hour at 70°C.
It should be noted that the above-mentioned extinction ratio varies depending on the incident angle θ (around 45°) of the light incident on the polarizer 2601 with the above configuration. That is, if the incident angle θ varies, then the effective thickness of the dielectrics A and B varies, and thus variations occur in the reflection and transmission characteristics for light. When it is assumed that the control is accomplished so as to obtain the optimum thickness, optics simulation and also experiments show that the incident angle measured in the polarizer 2601 should be within +/- 9° to obtain the minimum extinction ratio (about 50:1 or larger) required to detect magneto-optical signals. This tolerable maximum incident angle corresponds to a conversion light beam (or divergent light beam) with NA = 0.15 where NA is a numerical aperture in the medium.

In addition to the simple production method, the polarizer 2601 in accordance with this embodiment has a further great advantage that the requirement for the dimensional accuracy of the optical element 2620, in particular the requirement for the flatness of the inclined plane 2622 is extremely relaxed compared to that in the case of polarizing beam splitter made by conventional cutting of glass. This is because even if the flatness of the inclined plane 2622 is not good, the resin 2640 fills the irregularity. For example, when there exists difference in refractive index between the resin 2640 and the optical element 2620 by about 0.03, if the irregularity of the surface of the inclined plane 2622 is less than about 20 μm, no problems occur in optical characteristics. This means that the requirement is relaxed by factor of about 20 compared to the requirement of the flatness of the inclined plane of a triangular prism used in a polarizing beam splitter of a conventional type. Furthermore, parts can be produced by injection molding, outer dimensions can also be made very small. This means that it is possible to realize a very small optical system for detection when this polarizer is applied to an optical head for detecting magneto-optical signals.

In the example described above, the recessed inclined plane 2622 is molded with the resin 2640. However, alternatively, if good sealing is available, liquid such as silicone oil may be used as a filling material to obtain similar functions. In this case, it is easy to avoid the problem of birefringence which should be carefully avoided in the case of the resin 2640.

(Embodiment 20)

Figure 46 shows another type of polarizer in accordance with a twentieth embodiment of the present invention. In this embodiment, the polarizing beam splitter in embodiment 19 is replaced with a polarizing film or polarizing plate.

Referring to Figure 46, there is shown an optical element 2720 made by molding with an optical resin wherein a polarizing plate 2740 is fitted in a recessed portion and fixed there. Preferably, polarizing plate is made by incorporating silver particles of small size into a glass plate and by heating and extending it so as to give ability of polarization. This type of polarizing plate has good performance in extinction ratio. Alternatively, a polarizing film made by extending a film containing iodine may also be used. However, in general, polarizing films of this type are poor in heat-resisting properties. Films of this type are extended at a high temperature and later they shrink due to the residual stress, which leads to degradation in polarization performance.

The advantage of this embodiment is in that a polarizing plate or polarizing film is backed with an optical element 2720 which is much stronger than the polarizing plate or polarizing film and that thus shrinkage does not readily occur even in environment at a high temperature. Thus, it becomes possible to obtain a polarizer 2701 exhibiting good performance in resistance to environment. However, if there exists slight shear in an adhesive layer for combining the optical element 2720 with the polarizing plate or polarizing film 2740, there is possibility that the polarizing plate or polarizing film 2740 shrinks slightly, which may lead to aging. To avoid this, in this embodiment, annealing is carried out after an assembling process so as to relax the residual stress and thus so as to avoid aging. A preferable annealing condition is for example for 1 hour at 70°.

(Embodiment 21)

A twenty-first embodiment is an application of a polarizer shown in embodiment 19 to an optical head for detecting magneto-optical signals, which will be described hereinbelow referring to Figures 47, 48, and 49.

In Figure 47, there is shown an optical element 2820 similar to the optical element 2620 described in embodiment 19 except that there are provided three recessed inclined planes 2822a, 2822b, and 2822c which are formed in different directions from each other.

Furthermore, in this embodiment, instead of the second optical element 2630 in embodiment 19, a holographic element 2830 is used to construct a polarizer 2801. Thus, in this embodiment, different functions are integrated. All of three recessed inclined planes 2822a-2822c are filled with a resin having a refractive index about 1.5 which is equal to that of the optical element 2820. Figure 48 shows an optical head as assembled. The optical element 2820 is characterized in that it acts as a polarizing splitter, and besides it has a function of adjustment the optical lengths of returning light beams as in embodiment 14.

Figure 49 is a plan view of the optical head seen in the direction of the optical axis, in which each part in Figure 48 can be seen through. In Figure 49, the arrows 2829 indicate the direction of the inclined plane, that is the polarization direction of the transmitting light. The inclined plane 2828c at the central portion has a direction along a junction interface of a light emitting device 10, or in other words, along a plane of polarization. On the other hand, the inclined planes 2828a and 2828b on each side are formed in the directions rotated by about 45° from the direction of the inclined plane 2828c.

In this embodiment, it is assumed that a magneto-optical disk is used as an optical recording medium (not shown). Therefore, the optical head is arranged such that it detects the Kerr rotation angle as a modulating component, the Kerr rotation being induced on the returning light beam 2801r when the light beam is reflected from the optical medium. The light beam incident on an optical recording medium is plane polarized light.

In the case of this embodiment, a light beam with P-polarization with respect to the inclined plane 2828c is used. Therefore, a forward light beam (2801f in Figure 48) can pass through the inclined plane 2828c with almost no loss. In the returning path (there exist four returning light beams in total), pairs of the returning light beams 2801r try to pass through the inclined planes 2828a and 2828b. However, because the inclined planes 2828a and 2828b are oriented in the directions rotated by about +/- 45°, respectively, as described above, it is possible to detect the Kerr rotation angle, that is the magneto-optical modulation signal component included in the returning light beam 2801r by performing differential detection on the light beams with +/- 45° polarization components, wherein these polarization directions are perpendicular to each other.

Of three recessed inclined planes formed on the optical element 2820, the inclined plane 2828c in the central portion may be deleted without problems in functions. However, from the viewpoint of production method of parts, the central inclined plane is intentionally formed and a multi-layer dielectric thin film such that as in embodiment 20 is coated on it. This is because if the inclined plane 2828c is not inclined at all and thus it is an absolutely flat plane, and if a dielectric thin film is coated on it, then the incident angle of the forward light beam 2081f becomes zero, thus the plane 2828c reflects a significantly large amount of forward light beam 2801f without transmitting it. To avoid this problem, it is required to delete the dielectric thin film on the central portion. However, this needs an accurate and critical masking process. In this sense, the inclined plane 2828c exists as a dummy. However, in addition to a role of just a dummy, by making the inclined plane 2828c act as a polarizing splitter or a filter, it is possible to increase extinction ratio associated with the light emitting device 10 and thus the quality of magneto-optical signal can be improved to a certain degree.

(Embodiment 22)

A twenty-second embodiment is an application of a polarizer shown in embodiment 20 to an optical head for detecting magneto-optical signals, which will be described hereinbelow referring to Figures 50 and 51.

In this embodiment, the recessed inclined planes 2828a and 2828b for polarization splitting described in embodiment 21 are replaced with polarizing plate 2940a and 2940b. Therefore, the polarization directions of transmitted light associated with the polarizing plates 2940a and 2940b shown in Figure 51 correspond to the directions of inclined planes 2828a and 2828b.

In this embodiment, as shown in Figure 50, the polarizing plates 2940a and 2940b are fitted in an optical element 2920 and fixed there such that these polarizing plates are extruded by step L from the surface of the optical element 2920. This configuration acts in the same manner as in the case of the step L described in embodiment 14. Thus, the optical length of the returning optical path is compensated so as to cancel the initial offset in the focus error signal.

(Embodiment 23)

A twenty-third embodiment relates to addition of functions other than those described previously to the optical element 2020, as shown in Figure 52.

On the side 10 of an optical element 3020, in addition to stepped portions 3022 and a flat portion 3021 with a mirror surface, there is also provided an irregular-reflection surface 3023 with small irregularities, all of those being formed in a single piece. The irregular-reflection surface 3023 is a roughened surface with small irregularities in which the bottom-to-peak height and the pith are in the range of a few times $\lambda$ to a few ten times $\lambda$ ($\lambda$ is the wavelength of light to be used). When molding is performed, these irregularities are formed by transferring the irregularities in the corresponding portion of the inner surface of a mold, wherein the irregularities of the mold are formed by means of partial granulation or sand-blast. On the other hand, the flat portion 3021 and stepped portions 3022 should provide high efficiency transmission for the forward and returning light beams 3001f and 3001r in the optical system. To achieve this purpose, the flat portion 3021 and stepped portions 3022 have mirror surfaces and more preferably they may be coated with a antireflection film so as to improve the transmittance.

In optical heads of this type, because a light emitting device 10 and a light receiving device 3070 are arranged in proximity to each other, although the central portion of the divergence light beam emitted by the light emitting device 10 is incident on the entrance pupil of an objective lens (not shown) and utilized, there is some possibility that the other portion of the light beam is reflected from the inside of the optical head and falls on the light receiving device 3070. This is called stray light and it is added to a detected signal, which causes DC noise and further results in degradation of the signal quality. Therefore, it is desirable that such stray light be avoided as to a great degree as is possible. To achieve this, the present embodiment provides the irregular-reflection surface 3023 described above so as to absorb unwanted stray light generated in the optical head. In addition to absorption of the stray light, this irregular-reflection surface 3023 also scatters the stray light not absorbed in various directions so that each light receiving pattern (like 2173 of embodiment 15) on the light receiving device 3070 may receive the same amount of stray light and thus noise does not appear in the various detected signals of the output of differential detection.

If black paint or the like is coated (so-called black coating) on the irregular-reflection surface 3023 so as to enhance the ability of absorption of the stray light, more effective result can be obtained as a whole to achieve the purpose of the present embodiment.

(Embodiment 24)

In embodiment 23 described above, the stray light is avoided. In contrast to that, in this embodiment 24, peripheral portion of the light beam emitted by the light emitting device which is not used in previous embodiments is effectively used.

Referring to Figure 53, the divergence light beam emitted by the light emitting device 10 is reflected from a 45°-inclined plane 3172 formed by etching processing in the light receiving device 3170. The central portion of this light beam is incident as a forward light beam 3101f on an optical element 3120. In this embodiment, coating of the antireflection film is performed only in the region 3121 via which the forward light beam 3101f passes. If the antireflection film is formed by means of multi-evaporation (multi-coating), it is possible to obtain a surface with very low reflectance such as 0.5% or less. On the other hand, the non-coating area 3122 with no antireflection film has reflectance about 5% based on the Fresnel's formula.

A second light receiving element 3175 with a rather larger area is integrally formed on the upper surface of the light receiving device 3170 at the location slightly apart from the light emitting device 10. As shown in Figure 53, the peripheral light beam 3101b reflected from the non-coating area 3122 is received by the second light receiving element 3175. The amount of the peripheral light beam 3101b is proportional to the amount of the forward light beam 3101f that is the central portion of the light beam and also to the power of the emitted light emitted by the light emitting device 10. Therefore, by checking the signal (power monitor signal 3176) obtained by performing optical-to-electric signal conversion on the signal received by the second light receiving element 3175, it is possible to monitor the power of the emitted light, that is it is possible to monitor the power of the light emerging through the objective lens. If the power monitor signal 3176 is fed back to the driving current control circuit (not shown) for the light emitting device 10, APC (automatic power control) loop can be formed and thus it becomes possible to precisely control the power of the emitted light emitted from the light emitting device 10, which leads to stable recording and reproduction of information.

It is possible not only to separately use each of the embodiments described above, but to properly combine these embodiments so as to obtain further integration in functions.

INDUSTRIAL APPLICABILITY

As described above, the polarizer and optical element in accordance with the present invention are useful as a component element for use in an optical recording/reproducing device or for use in an optical head which is a key component of an optical recording/reproducing device. In particular, these are very suitable for mass production of small sized and integrated optical heads with a simple configuration. The optical head of such a type makes a great contribution to a reduction of the size of a device for recording and reproducing information on/from a magneto-optical recording medium. Furthermore, great degree of improvement of performance and great cost reduction can be achieved. The polarizer in accordance with the present invention can be applied not only to an optical recording/reproducing device, but to general optical devices. For example, it can be used as an polarization control element in a liquid crystal display or the like.

**Claims**

1. A polariser in which an inclined plane (1211, 1216) is formed in at least two locations (1202, 1205) on the same surface of the same transparent substrate (1206) and extending into the substrate, and a polarising optical thin film (203) is formed on each said inclined plane, wherein:

   a space defined by the inclined plane and the plane of the surface of the substrate is filled with a transparent material (1212), characterised in that:
   the line of intersection of each inclined plane with the plane of the surface of the substrate is a straight line;
   the angle between said line of intersection of a first inclined plane (1211) and a line of a reference direction (1201) of said substrate is +A°; and
   the angle between said line of intersection of a second inclined plane (1216) and said line of a reference direction (1201) is - A° for detecting specific polarization directions in at least two different symmetrical directions by one polarizer.

2. A polariser according to claim 1, wherein the angle between each said inclined plane and the plane of the surface of the substrate is about 45°.

3. A polariser according to claim 1 or claim 2, wherein: inclined planes are formed in at least four locations (1202, 1203, 1204, 1205) on the same surface of the same transparent substrate (1206), wherein

   the angle between the line of intersection of two of said inclined planes with said substrate and a line of a reference direction of said substrate is +A°; and
   the angle between the line of intersection of two others of said inclined planes with said substrate and said line of a reference direction is -A°.

4. A polariser according to any one of the preceding claims, wherein a plurality of said inclined planes is formed on the same surface of the same substrate (1206) in each of at least two regions (1202, 1205);

   the inclined planes within each region are parallel and contiguous such that they form a sawtooth-shaped cross-section in a perpendicular direction of said substrate comprising a plurality of sawtooth elements;
   the line of intersection of a plane of each of said sawtooth elements with the plane of the surface of the substrate defines a straight edge line (301, 303);
   the angle between the straight edge lines in a first region (1202) and said line of a reference direction of said substrate is +A°; and
   the angle between the straight edge lines in a second region (1205) and said line of a reference direction of said substrate is -A°.

5. A polariser according to claim 4, wherein each of the internal angles defined by two intersecting planes of a sawtooth element is about 90°.

6. A polariser according to any one of the preceding claims, wherein the angle between the line of intersection of each of said inclined planes with the plane of the surface of the substrate and said line of a reference direction of said substrate is either +A° or -A°.

7. A polariser according to any one of the preceding claims, wherein said angle A is about 45°.

8. A polariser according to any one of the preceding claims, wherein the polariser comprises a first optical member and a second optical member bonded to said first optical member and said inclined planes are formed in either said first optical member or said second optical member.

9. A polariser according to claim 8, wherein the refractive indices of all of said first optical member, said second optical member and said transparent filling substrate are substantially equal to each other.

10. A polariser according to claim 8 or claim 9, wherein the materials of said first optical member, said second optical member and said transparent filling substrate are selected to have a refractive index such that when a convergent or divergent optical light beam is made incident on said inclined plane, the numerical aperture is 0.15 or less.

11. An optical head for use in an optical recording device for recording/reproducing information on/from a magneto-optical recording medium (1401), comprising:

   a semiconductor laser acting as a light source (1409);
   a light beam splitter means (1403) for splitting light into at least two directions;
   a light receiving device (1410, 1411); and
   a polariser (1406) according to any one of the preceding claims, said polariser being disposed between said light beam splitter means and said light receiving device, wherein
   light from the light source, directed onto the magneto-optical recording medium and returning light from the magneto-optical recording medium is transmitted through the light beam splitter such that substantially only returning light from the magneto-optical recording medium is split into at least two directions; and
   said reference direction of the substrate is the polarisation direction of returning light from the magneto-optical recording medium.

12. An optical head according to claim 11, wherein said light beam splitter is a hologram consisting of a diffraction grating.

13. An optical head according to claim 12, wherein said hologram is a blazed hologram on which blazing processing is performed.

14. An optical head according to any one of claims 11 to 13, wherein said polariser is bonded to said light beam splitter with a transparent material (1503).

15. An optical head according to any one of claims 11 to 13, wherein said polariser is formed on one surface of one optical member and said light beam splitter means is formed on the other surface.

16. An optical head according to any one of claims 11 to 13, having said light beam splitter means and a package (1408) containing said light receiving device (1410, 1411) and said semiconductor laser acting as a light source (1409), wherein said light beam splitter means (1403) is bonded to one surface of said polariser (1406) via a transparent material, and said package is bonded to the other surface of said polariser.

17. An optical head according to any one of claims 11 to 16, further comprising: first and second pairs of sensors for sensing light which has passed through said first and second inclined planes respectively;

   first and second addition amplifiers (1709, 1710) for adding the outputs of the first and second pairs of sensors respectively; and

a differential amplifier (1711) for detecting the difference between the outputs of the first and second addition amplifiers, for reproducing a magneto-optical signal.

18. An optical head according to claim 11, wherein:

the light source (1608) and the light receiving device (1609, 1610) are contained in one package (1408);
both of light from said light source and returning light from said magneto-optical recording medium (1401) pass through the same polariser (1602);
an inclined plane (1601, 1606) is formed in at least three locations of said polariser;
the returning light from said magneto-optical recording medium is incident on said first and second inclined planes (1604, 1606); and
a third inclined plane (1601) is disposed in the optical path from said light source such that the polarisation direction of an incident light beam may be P-polarisation with respect to the inclined plane.

19. An optical head according to any one of claims 11 to 18 comprising an optical element consisting of a member in the form of a single piece through which converging or diverging forward and returning light beams pass, which is configured such that the optical length of said forward light beam is different from that of said returning light beam.

20. An optical head according to claim 19, wherein said optical element is molded with a transparent resin or glass into the form of a single piece, and a step (L) is provided on the surface thereof.

21. An optical head according to claim 19, wherein said optical element comprises at least two discrete parts which are bonded to each other, and in a situation in which said discrete parts are bonded to each other, a step (L) is formed on the surface thereof.

22. An optical head according to claim 19, wherein, in said optical element:

at least two different values of refractive indices are partially provided;
a forward light beam (2101f) and a returning light beam (2101r) pass through different areas with different refractive areas with different refractive indices, respectively; and
the optical length of the forward light beam is different from that of the retuming light beam.

23. An optical head according to claim 19, wherein, in said optical element:

a forward optical beam and a returning optical beam pass through a member formed in a single piece; and
the refracting power associated with a region which the forward optical beam passes through is different from that associated with a region which the returning optical beam passes through.

24. An optical head according to claim 23, wherein a convex or concave curved surface (2422) is formed locally on the surface of the optical element.

25. An optical head according to claim 19, wherein:

the light receiving device is disposed behind said optical element such that said light receiving device is approximately opposed to said optical element;
the semiconductor laser acting as a light source is disposed at a position slightly higher or slightly lower than the position of the light receiving surface of said light receiving device; and
both a forward light beam emitted by said light source and a returning light beam travelling toward the light receiving device after being reflected from the magneto-optical recording medium pass through said optical element.

26. An optical head according to claim 25, wherein at least a focusing error signal is generated by detecting a change in the shape of the spot of said returning light beam formed on said light receiving device.

27. An optical head according to claim 25 or claim 26, wherein:

said optical element is made of a transparent resin;
said optical element has a flange at its periphery; and
said flange has a gate for use in injection molding.

28. An optical head according to any one of claims 25 to 27, wherein:

said optical element is made of a transparent resin; and
an alignment mark (2522, 2532, 2572) for positioning is formed or printed on the primary surface or the back surface of said optical element and on the surface of said light receiving device.

**29.** An optical head according to any one of claims 25 to 28, wherein the light beam splitter is formed on the primary surface or the back surface of said optical element.

**30.** An optical head according to claim 29, wherein the light beam splitter is a hologram and said hologram is a blazed hologram which is blazed into the form of triangular teeth with a pitch of diffraction grooves.

**31.** An optical head according to any one of claims 25 to 30, comprising:

a package for holding said light receiving device and said light source;
wherein said light receiving device and said light source are sealed with said optical element and said package.

**32.** An optical head according to claim 31, wherein:

said optical element and said package are fixed to each other via an adhesive (85); and
the hardness of said adhesive as cured is lower than the hardness of the materials of said optical element (2570) and said package (80).

**33.** An optical head according to any one of claims 11 to 32, using an optical element, said optical element being divided into a mirror-finished region and an irregular reflection region with small irregularities, wherein a forward light beam and returning light beam pass through said mirror-finished region.

**34.** An optical head according to any one of claims 11 to 32, using an optical element, said optical element being divided into a coated region (3121) coated with an antireflection film and a non-coated region (3122), wherein:

the central portion of a divergent light beam emitted by a light emitting device passes through said coated region coated with an antireflection film;
a portion of said divergent light beam is reflected from said non-coated region; and
there is provided a second light receiving device for receiving light reflected from said non-coated region so as to detect the emitted light power.

**35.** An optical head according to claim 34, having:

said second light receiving device (3175) for detecting the emitted light power; and
a first light receiving device (3170) for receiving a returning light beam reflected from an optical recording medium;

wherein said first and second light receiving devices are formed on a substrate in the form of a single piece.

**36.** A method of manufacturing a polariser according to claim 4, wherein said polarising optical thin film is formed by transferring a sawtooth-like shape to a transparent substrate by means of hot-stamping and further depositing a dielectric thin film on it by means of evaporation.

**37.** A method of manufacturing a polariser according to claim 4, wherein said polarising optical thin film is formed by pressing and rolling a roller having a sawtooth-shaped structure on its surface on a transparent substrate so as to continuously transfer a sawtooth-like shape to said transparent substrate and further depositing a dielectric thin film on said substrate by means of evaporation.

**38.** A method of manufacturing a polariser according to claim 8, including the steps of:

forming recesses with inclined planes in either said first optical member or said second optical member;
depositing a multi-layer dielectric thin film on said inclined planes by means of evaporation so as to obtain a function of a polarising splitter;
filling said recesses with a transparent resin or liquid; and
bonding said first and second optical members to each other.

**39.** A method according to claim 38, further comprising the step of performing an annealing process.

**40.** A method of manufacturing polariser according to claim 4, wherein the polarising optical thin film is formed by a method including the steps of:

performing injection molding with a resin or glass so as to transfer a sawtooth structure; and
depositing a dielectric thin film on the sawtooth structure by means of evaporation.

**Patentansprüche**

**1.** Polarisator, bei dem an mindestens zwei Stellen (1202, 1205) auf derselben Oberfläche desselben transparenten Substrats (1206) eine sich in das Substrat erstreckende geneigte Ebene (1211, 1216) gebildet ist und und auf jeder geneigten Ebene ein polarisierender optischer Dünnfilm (203) ausgebildet ist, wobei ein von der geneigten Ebene und der Ebene der Oberfläche des Substrats begrenzter Raum mit einem transparenten Material (1212) gefüllt ist, **dadurch gekennzeichnet, daß** die Schnittlinie jeder geneigten Ebene mit der Ebene der Oberfläche des Substrats eine gerade Linie ist, der Winkel zwischen der Schnittlinie einer ersten geneigten Ebene (1211) und einer Linie einer Referenzrichtung (1201) des Substrats +A° ist und der Winkel zwischen der Schnittlinie einer zweiten geneigten Ebene (1216) und der Linie der Referenzrichtung (1201) -A° ist, um bestimmte Polarisationsrichtungen in mindestens zwei verschiedenen symmetrischen Richtungen mittels eines Polarisators zu detektieren.

2. Polarisator nach Anspruch 1, bei dem der Winkel zwischen jeder geneigten Ebene und der Ebene der Oberfläche des Substrats etwa 45° beträgt.

3. Polarisator nach Anspruch 1 oder Anspruch 2, bei dem an mindestens vier Stellen (1202, 1203, 1204, 1205) auf derselben Oberfläche desselben transparenten Substrats (1206) geneigte Ebenen gebildet sind, wobei der Winkel zwischen der Schnittlinie zweier der geneigten Ebenen mit dem Substrat und einer Linie einer Referenzrichtung des Substrats +A° ist und der Winkel zwischen der Schnittlinie zweier anderer der geneigten Ebenen mit dem Substrat und der Linie der Referenzrichtung -A° ist.

4. Polarisator nach einem der vorhergehenden Ansprüche, bei dem in jedem von mindestens zwei Bereichen (1202, 1205) mehrere geneigte Ebenen auf derselben Oberfläche desselben Substrats (1206) gebildet sind, wobei in jedem Bereich die geneigten Ebenen parallel verlaufen und derart benachbart liegen, daß sie in senkrechter Richtung des Substrats einen sägezahnförmigen Querschnitt mit einer Mehrzahl von Sägezahnelementen bilden, wobei die Schnittlinie einer Ebene jedes der Sägenzahnelemente mit der Ebene der Oberfläche des Substrats eine gerade Kantenlinie (301, 303) bildet, der Winkel zwischen den geraden Kantenlinien in einem ersten Bereich (1202) und der Linie der Referenzrichtung des Substrats +A° ist und der Winkel zwischen den geraden Kantenlinien in einem zweiten Bereich (1205) und der Linie der Referenzrichtung des Substrats -A° ist.

5. Polarisator nach Anspruch 4, bei dem jeder der von zwei Schnittebenen eines Sägezahnelements begrenzten Innenwinkel eta 90° beträgt.

6. Polarisator nach einem der vorhergehenden Ansprüche, bei dem der Winkel zwischen der Schnittlinie jeder der geneigten Ebenen mit der Ebene der Oberfläche des Substrats und der Linie der Referenzrichtung des Substrats entweder +A° oder -A° ist.

7. Polarisator nach einem der vorhergehenden Ansprüche, bei dem der Winkel A etwa 45° beträgt.

8. Polarisator nach einem der vorhergehenden Ansprüche, wobei der Polarisator ein erstes optisches Element und ein zweites optisches Element aufweist, welches mit dem ersten optischen Element verbunden ist, wobei die geneigten Ebenen entweder in dem ersten optischen Element oder in dem zweiten optischen Element gebildet sind.

9. Polarisator nach Anspruch 8, bei dem die Brechungsindizes des ersten optischen Elements, des zweiten optischen Elements und des transparenten Füllsubstrats alle im wesentlichen zueinander gleich sind.

10. Polarisator nach Anspruch 8 oder Anspruch 9, bei dem die Materialien des ersten optischen Elements, des zweiten optischen Elements und des transparenten Füllsubstrats mit einem solchen Brechungsindex ausgewählt sind, daß bei Einfall eines konvergierenden oder divergierenden optischen Lichtstrahls auf die geneigte Ebene die numerische Apertur 0,15 oder weniger beträgt.

11. Optischer Kopf zur Verwendung in einer optischen Aufzeichnungsvorrichtung zur Aufzeichnung/Wiedergabe von Informationen auf/von einem magneto-optischen Aufzeichnungsmedium (1401), umfassend:

   - einen als Lichtquelle (1409) dienenden Halbleiterlaser,
   - ein Lichtstrahlteilermittel (1403), um Licht in mindestens zwei Richtungen zu teilen,
   - eine Lichtempfangsvorrichtung (1410, 1411) und
   - einen Polarisator (1406) nach einem der vorhergehenden Ansprüche, wobei der Polarisator zwischen dem Lichtstrahlteilermittel und der Lichtempfangsvorrichtung angeordnet ist,

   wobei auf das magneto-optische Aufzeichnungsmedium gerichtetes Licht von der Lichtquelle und rückkehrendes Licht vom magneto-optischen Aufzeichnungsmedium durch den Lichtstrahlteiler derart durchgelassen werden, daß im wesentlichen nur das rückkehrende Licht vom magneto-optischen Aufzeichnungsmedium in mindestens zwei Richtungen geteilt wird, und wobei die Referenzrichtung des Substrats die Polarisationsrichtung des rückkehrenden Lichts vom magneto-optischen Aufzeichnungsmedium ist.

12. Optischer Kopf nach Anspruch 11, bei dem der Lichtstrahlteiler ein von einem Diffraktionsgitter gebildetes Hologramm ist.

**13.** Optischer Kopf nach Anspruch 12, bei dem das Hologramm ein Blaze-Hologramm ist, an dem eine Blaze-Bearbeitung durchgeführt ist.

**14.** Optischer Kopf nach einem der Ansprüche 11 bis 13, bei dem der Polarisator mittels eines transparenten Materials (1503) mit dem Lichtstrahlteiler verbunden ist.

**15.** Optischer Kopf nach einem der Ansprüche 11 bis 13, bei dem der Polarisator an einer Oberfläche eines optischen Elements gebildet ist und das Lichtstrahlteilermittel an der anderen Oberfläche gebildet ist.

**16.** Optischer Kopf nach einem der Ansprüche 11 bis 13, mit dem Lichtstrahlteilermittel und einem Gehäuse (1408), das die Lichtempfangsvorrichtung (1410, 1411) und den als Lichtquelle (1409) dienenden Halbleiterlaser aufnimmt, wobei das Lichtstrahlteilermittel (1403) mittels eines transparenten Materials mit einer Oberfläche des Polarisators (1406) verbunden ist und das Gehäuse mit der anderen Oberfläche des Polarisators verbunden ist.

**17.** Optischer Kopf nach einem der Ansprüche 11 bis 16, ferner umfassend:

- eine erstes und ein zweites Paar von Sensoren zur Erfassung von Licht, welches durch die erste bzw. zweite geneigte Ebene hindurchgegangen ist,
- einen ersten und einen zweiten Additionsverstärker (1709, 1710) zum Addieren der Ausgangssignale des ersten bzw. zweiten Paars von Sensoren und
- einen Differenzverstärker (1711) zur Detektion der Differenz zwischen den Ausgangssignalen des ersten und des zweiten Additionsverstärkers, um ein magneto-optisches Signal zu reproduzieren.

**18.** Optischer Kopf nach Anspruch 11, bei dem:

- die Lichtquelle (1608) und die Lichtempfangsvorrichtung (1609, 1610) in einem Gehäuse (1408) untergebracht sind,
- Licht von der Lichtquelle und rückkehrendes Licht vom magneto-optischen Aufzeichnungsmedium (1401) durch denselben Polarisator (1602) hindurchgehen,
- an mindestens drei Stellen des Polarisators eine geneigte Ebene (1601, 1606) gebildet ist,
- das rückkehrende Licht vom magneto-optischen Aufzeichnungsmedium auf die erste und die zweite geneigte Ebene (1604, 1606) einfällt und
- eine dritte geneigte Ebene (1601) im optischen Weg von der Lichtquelle derart angeordnet ist, daß die Polarisationsrichtung eines einfallenden Lichtstrahls die P-Polarisation bezüglich der geneigten Ebene sein kann.

**19.** Optischer Kopf nach einem der Ansprüche 11 bis 18, umfassend ein optisches Element, welches aus einem Element in Form eines einzelnen Stücks besteht, durch das konvergierende oder divergierende hin- und rücklaufende Lichtstrahlen hindurchgehen, wobei das optische Element so ausgebildet ist, daß die optische Länge des hinlaufenden Lichtstrahls sich von der des rücklaufenden Lichtstrahls unterscheidet.

**20.** Optischer Kopf nach Anspruch 19, bei dem das optische Element aus transparentem Harz oder Glas in die Form eines einzelnen Stücks geformt ist und an seiner Oberfläche eine Stufe (L) vorgesehen ist.

**21.** Optischer Kopf nach Anspruch 19, bei dem das optische Element mindestens zwei gesonderte, miteinander verbundene Teile aufweist und in einem Zustand, in dem die gesonderten Teile miteinander verbunden sind, an seiner Oberfläche eine Stufe (L) gebildet ist.

**22.** Optischer Kopf nach Anspruch 19, bei dem in dem optischen Element mindestens zwei verschiedene Werte des Brechungsindex partiell vorgesehen sind, ein hinlaufender Lichtstrahl (2101f) und ein rücklaufender Lichtstrahl (2101r) durch verschiedene Bereiche mit verschiedenen Brechungsbereichen mit unterschiedlichen Brechungsindizes hindurchgehen und die optische Länge des hinlaufenden Lichtstrahls sich von der des rücklaufenden Lichtstrahls unterscheidet.

**23.** Optischer Kopf nach Anspruch 19, bei dem in dem optischen Element ein hinlaufender optischer Strahl und ein rücklaufender optischer Strahl durch ein als einzelnes Stück ausgebildetes Element hindurchgehen und die mit einem Bereich, durch den der hinlaufende optische Strahl hindurchgeht, verbundene Brechungsleistung sich von derjenigen unterscheidet, die mit einem Bereich verbunden ist, durch den der rücklaufende optische Strahl hindurchgeht.

**24.** Optischer Kopf nach Anspruch 23, bei dem eine konvexe oder konkave Krümmungsfläche (2422) an der Oberfläche des optischen Elements lokal ausgebildet ist.

**25.** Optischer Kopf nach Anspruch 19, bei dem

- die Lichtempfangsvorrichtung derart hinter dem optischen Element angeordnet ist, daß die Lichtempfangsvorrichtung dem optischen Element annähernd gegenüberliegt,

- der als Lichtquelle dienende Halbleiterlaser in geringfügig höherer oder geringfügig tieferer Lage als die Lage der Lichtempfangsfläche der Lichtempfangsvorrichtung angeordnet ist und

- sowohl ein von der Lichtquelle emittierter hinlaufender Lichtstrahl als auch ein rücklaufender Lichtstrahl, der nach Reflexion an dem magneto-optischen Aufzeichnungsmedium zur Lichtempfangsvorrichtung läuft, durch das optische Element hindurchgehen.

26. Optischer Kopf nach Anspruch 25, bei dem zumindest ein Fokussierungsfehlersignal durch Erfassung einer Formänderung des auf der Lichtempfangsvorrichtung gebildeten Flecks des rücklaufenden Lichtstrahls erzeugt wird.

27. Optischer Kopf nach Anspruch 25 oder Anspruch 26, bei dem das optische Element aus einem transparenten Harz hergestellt ist, das optische Element an seinem Rand einen Flansch aufweist und der Flansch einen Einlauf zur Verwendung beim Spritzgießen aufweist.

28. Optischer Kopf nach einem der Ansprüche 25 bis 27, bei dem das optische Element aus einem transparenten Harz hergestellt ist und an der Primärseite oder der Rückseite des optischen Elements und an der Oberfläche der Lichtempfangsvorrichtung eine Ausrichtmarkierung (2522, 2532, 2572) zur Positionierung gebildet oder aufgedruckt ist.

29. Optischer Kopf nach einem der Ansprüche 25 bis 28, bei dem der Lichtstrahlteiler an der Primärseite oder der Rückseite des optischen Elements gebildet ist.

30. Optischer Kopf nach Anspruch 29, bei dem der Lichtstrahlteiler ein Hologramm ist und das Hologramm ein Blaze-Hologramm ist, das durch Blaze-Bearbeitung in die Form von Dreieckszähnen mit dem Abstand von Diffraktionsnuten gebracht ist.

31. Optischer Kopf nach einem der Ansprüche 25 bis 30, umfassend ein Gehäuse zum Halten der Lichtempfangsvorrichtung und der Lichtquelle, wobei die Lichtempfangsvorrichtung und die Lichtquelle mit dem optischen Element und dem Gehäuse dicht abgeschlossen sind.

32. Optischer Kopf nach Anspruch 31, bei dem das optische Element und das Gehäuse mittels eines Klebstoffs (85) aneinander befestigt sind und die Härte des ausgehärteten Klebstoffs geringer als die Härte der Materialien des optischen Elements (2570) und des Gehäuses (80) ist.

33. Optischer Kopf nach einem der Ansprüche 11 bis 32, mit einem optischen Element, wobei dieses optische Element in einen spiegelpolierten Bereich und einen irregulären Reflexionsbereich mit kleinen Irregularitäten unterteilt ist, wobei ein hinlaufender Lichtstrahl und ein rücklaufender Lichstrahl durch den spiegelpolierten Bereich hindurchgehen.

34. Optischer Kopf nach einem der Ansprüche 11 bis 32, mit einem optischen Element, wobei dieses optische Element in einen beschichteten Bereich (3121), der mit einem Antireflexionsfilm beschichtet ist, und einen unbeschichteten Bereich (3122) unterteilt ist, wobei der mittlere Teil eines von einer lichtemittierenden Vorrichtung ausgesandten divergierenden Lichtstrahls durch den mit dem Antireflexionsfilm beschichteten Bereich hindurchgeht, ein Teil des divergierenden Lichtstrahls an dem unbeschichteten Bereich reflektiert wird und eine zweite Lichtempfangsvorrichtung vorgesehen ist, um von dem unbeschichteten Bereich reflektiertes Licht zu empfangen und so die emittierte Lichtleistung zu erfassen.

35. Optischer Kopf nach Anspruch 34, mit der zweiten Lichtempfangsvorrichtung (3175) zur Detektion der emittierten Lichtleistung und einer ersten Lichtempfangsvorrichtung (3170) zum Empfang eines von einem optischen Aufzeichnungsmedium reflektierten rücklaufenden Lichtstrahls, wobei die erste und die zweite Lichtempfangsvorrichtung auf einem Substrat in Form eines einzelnen Stücks gebildet sind.

36. Verfahren zur Herstellung eines Polarisators nach Anspruch 4, bei dem der polarisierende optische Dünnfilm dadurch gebildet wird, daß durch Heißprägen eine sägezahnartige Form auf ein transparentes Substrat übertragen wird und ferner ein dielektrischer Dünnfilm durch Aufdampfen darauf aufgebracht wird.

37. Verfahren zur Herstellung eines Polarisators nach Anspruch 4, bei dem der polarisierende optische Dünnfilm dadurch gebildet wird, daß eine Rolle mit einer sägezahnförmigen Struktur an ihrer Oberfläche auf ein transparentes Substrat gedrückt und auf diesem gerollt wird, um so kontinuierlich eine sägezahnartige Form auf das transparente Substrat zu übertragen, und ferner ein dielektrischer Dünnfilm durch Aufdampfen auf das Substrat aufgebracht wird.

38. Verfahren zur Herstellung eines Polarisators nach Anspruch 8, umfassend die Schritte:

- Bilden von Aussparungen mit geneigten Ebenen entweder in dem ersten optischen Element oder in dem zweiten optischen Element,

- Aufbringen eines mehrschichtigen dielektrischen Dünnfilms auf die geneigten Ebenen durch Aufdampfen, um die Funktion eines Polarisationsteilers zu erhalten,
- Füllen der Aussparungen mit einem transparenten Harz oder einer Flüssigkeit und
- Verbinden des ersten und des zweiten optischen Elements miteinander.

39. Verfahren nach Anspruch 38, ferner umfassend den Schritt der Durchführung eines Vergütungsvorgangs.

40. Verfahren zur Herstellung eines Polarisators nach Anspruch 4, bei dem der polarisierende optische Dünnfilm durch ein Verfahren gebildet wird, welches die Schritte umfaßt:

- Durchführen eines Spritzgießvorgangs mit Harz oder Glas zwecks Übertragung einer Sägezahnstruktur und
- Aufbringen eines dielektrischen Dünnfilms auf die Sägezahnstruktur durch Aufdampfen.

## Revendications

1. Polariseur dans lequel un plan incliné (1211, 1216) est formé à au moins deux emplacements (1202, 1205) sur la même surface du même substrat transparent (1206) et s'étendant dans le substrat et un film mince optique de polarisation (203) est formé sur chaque plan incliné, dans lequel :

   un espace défini par le plan incliné et le plan de la surface du substrat est rempli d'un matériau transparent (1212), caractérisé en ce que :
   la ligne d'intersection de chaque plan incliné avec le plan de la surface du substrat est une ligne droite ;
   l'angle entre ladite ligne d'intersection du premier plan incliné (1211) et une ligne de direction de référence (1201) dudit substrat et + A° ; et
   l'angle entre la ligne d'intersection d'un second plan incliné (1216) et ladite ligne de direction de référence (1201) et - A° pour détecter les directions de la polarisation spécifique dans au moins deux directions symétriques différentes par un seul polariseur.

2. Polariseur selon la revendication 1, dans lequel l'angle entre chaque plan incliné et le plan de la surface du substrat est d'environ 45°.

3. Polariseur selon la revendication 1 ou la revendication 2, dans lequel :

   des plans inclinés sont formés dans au moins quatre emplacements (1202, 1203, 1204, 1205) sur la même surface du même substrat transparent (1206), dans lequel
l'angle entre la ligne d'intersection de deux des plans inclinés avec ledit substrat et une ligne de direction de référence dudit substrat est + A° ; et
l'angle entre la ligne d'intersection des deux autres plans inclinés avec ledit substrat et ladite ligne de direction de référence est - A°.

4. Polariseur selon l'une quelconque des revendications précédentes, dans lequel une pluralité desdits plans inclinés est formée sur la même surface du même substrat (1206) dans chacune d'au moins deux régions (1202, 1205) ;

   les plans inclinés à l'intérieur de chaque région sont parallèles et contigus de manière à former une section transversale en forme de dents de scie dans une direction perpendiculaire dudit substrat comprenant une pluralité d'éléments de dents de scie ;
   la ligne d'intersection d'un plan de chaque élément desdits éléments de dents de scie avec le plan de la surface du substrat définit une ligne d'arête droite (301, 303) ;
   l'angle entre les lignes d'arête droites dans une première région (1202) et ladite ligne de direction de référence dudit substrat est + A° ; et
   l'angle entre les lignes d'arête droites dans une seconde région (1205) et ladite ligne de direction de référence dudit substrat et - A°.

5. Polariseur selon la revendication 4, dans lequel chacun des angles internes défini par deux plans d'intersection d'un élément en dents de scie est d'environ 90°.

6. Polariseur selon l'une quelconque des revendications précédentes, dans lequel l'angle entre la ligne d'intersection de chacun desdits plans inclinés avec le plan de la surface du substrat et ladite ligne de direction de référence dudit substrat est soit + A°, soit - A°.

7. Polariseur selon l'une quelconque des revendications précédentes, dans lequel ledit angle A est d'environ 45°.

8. Polariseur selon l'une quelconque des revendications précédentes, dans lequel le polariseur comprend un premier élément optique et un second élément optique collé audit premier élément optique et lesdits plans inclinés sont formés dans un élément parmi ledit premier élément optique ou ledit second élément optique.

9. Polariseur selon la revendication 8, dans lequel les indices de réfraction de la totalité dudit premier élément optique, dudit second élément optique et dudit substrat rempli de matériau transparent sont sensiblement égaux les uns aux autres.

10. Polariseur selon la revendication 8 ou la revendication 9, dans lequel les matériaux dudit premier élément optique, dudit second élément optique et dudit substrat rempli d'un matériau transparent sont choisis pour avoir un indice de réfraction d'une manière telle que lorsqu'un faisceau lumineux optique convergent ou divergent est rendu incident sur lesdits plans inclinés, l'ouverture numérique est de 0,15 ou moins.

11. Tête optique pour utilisation dans un dispositif d'enregistrement optique pour enregistrer/reproduire les informations sur/depuis un support d'enregistrement magnéto-optique (1401), comprenant :

     un laser à semi-conducteur agissant comme source de lumière (1409) ;
     un moyen de séparateur de faisceau lumineux (1403) pour séparer la lumière dans au moins deux directions ;
     un dispositif de réception de lumière (1410, 1411) ; et
     un polariseur (1406) selon l'une quelconque des revendications précédentes, ledit polariseur étant disposé entre ledit moyen de séparateur de faisceau lumineux et ledit dispositif de réception de lumière, dans lequel
     la lumière provenant de la source de lumière dirigée sur le support d'enregistrement magnéto-optique et la lumière en retour du support d'enregistrement magnéto-optique est transmise à travers le séparateur de faisceaux lumineux d'une manière telle que sensiblement seule la lumière en retour du support d'enregistrement magnéto-optique est séparée dans au moins deux directions ; et
     ladite direction de référence de substrat est la direction de la polarisation de la lumière de retour provenant du support d'enregistrement magnéto-optique.

12. Tête optique selon la revendication 11, dans laquelle ledit séparateur de faisceaux lumineux est un hologramme qui est constitué d'un réseau de diffraction.

13. Tête optique selon la revendication 12, dans laquelle ledit hologramme est un hologramme griffé sur lequel un traitement de griffage est effectuée.

14. Tête optique selon l'une quelconque des revendications 11 à 13, dans laquelle ledit polariseur est collé audit séparateur de faisceau lumineux avec un matériau transparent (1503).

15. Tête optique selon l'une quelconque des revendications 11 à 13, dans laquelle ledit polariseur est formé sur une surface d'un premier élément optique et ledit moyen de séparateur de faisceaux lumineux est formé sur l'autre surface.

16. Tête optique selon l'une quelconque des revendications 11 à 13, comportant ledit moyen de séparateur de faisceaux lumineux et un boîtier (1408) contenant ledit dispositif de réception de lumière (1410, 1411) et ledit laser à semi-conducteur agissant comme source de lumière (1409), dans laquelle ledit moyen de séparateur de faisceaux lumineux (1403) est collé à une surface dudit polariseur (1406) via un matériau transparent et ledit boîtier est collé à l'autre surface dudit polariseur.

17. Tête optique selon l'une quelconque des revendications 11 à 16, comprenant en outre :

     des première et seconde paires de capteurs pour détecter la lumière qui est passée à travers lesdits premier et second plans inclinés, respectivement ;
     des premiers et second amplificateurs d'addition (1709, 1710) pour ajouter les sorties des première et seconde paires de capteurs respectivement ; et
     un amplificateur différentiel (1711) pour détecter la différence entre les sorties des premier et second amplificateurs d'addition, pour produire un signal magnéto-optique.

18. Tête optique selon la revendication 11, dans laquelle :

     la source de lumière (1608) et le dispositif de réception de lumière (1609, 1610) sont contenus dans un boîtier (1408) ;
     la lumière provenant de ladite source de lumière et la lumière en retour dudit support d'enregistrement magnéto-optique (1401) passent à travers le même polariseur (1602) ;
     un plan incliné (1601, 1606) est formé à au moins trois emplacements dudit polariseur ;
     la lumière en retour du support d'enregistrement magnéto-optique est incidente sur lesdits premier et second plans inclinés (1602, 1606) ; et
     un troisième plan incliné (1601) est disposée dans le trajet optique partant de ladite source de lumière d'une manière telle que la direction de la polarisation d'un faisceau lumineux incident puisse être à polarisation-P par rapport au plan incliné.

**19.** Tête optique selon l'une quelconque des revendications 11 à 18, comprenant un élément optique qui est constitué d'un élément sous la forme d'une seule pièce à travers laquelle passent les faisceaux lumineux direct et de retour convergent ou divergent , laquelle est configurée d'une manière telle que la longueur optique dudit faisceau lumineux direct est différente de celle dudit faisceau lumineux en retour.

**20.** Tête optique selon la revendication 19, dans laquelle ledit élément optique est moulé avec une résine transparente ou verre transparent sous la forme d'une seule pièce et un palier (L) est disposé sur sa surface.

**21.** Tête optique selon la revendication 19, dans laquelle ledit élément comprend au moins deux parties discrètes qui sont collées l'une à l'autre et, dans une situation dans laquelle lesdites parties discrètes sont collées l'une à l'autre , un palier (L) est formé sur sa surface.

**22.** Tête optique selon la revendication 19, dans laquelle dans ledit élément optique :

au moins deux valeurs différentes d'indices de réfraction sont partiellement fournies ; un faisceau lumineux direct (2101f) et un faisceau lumineux de retour (2101r) passent à travers différentes zones avec des zones de réfraction différentes ayant des indices de réfraction différents, respectivement ; et la longueur optique du faisceau lumineux direct est différente de celle du faisceau lumineux de retour.

**23.** Tête optique selon la revendication 19, dans laquelle dans ledit élément optique :

un faisceau optique direct et un faisceau optique de retour passent à travers un élément formé en une seule pièce ; et la puissance de réfraction associée à une région que traverse le faisceau optique direct est différente de celle associée à la région que traverse le faisceau optique de retour.

**24.** Tête optique selon la revendication 23, dans laquelle une surface incurvée convexe ou concave (2422) est formée localement sur la surface de l'élément optique.

**25.** Tête optique selon la revendication 19, dans laquelle :

le dispositif de réception de lumière est disposé derrière ledit élément optique d'une manière telle que ledit dispositif de réception de lumière est approximativement opposé audit élément optique ; le laser à semi-conducteur agissant comme source de lumière est disposé à une position légèrement plus haute ou légèrement plus basse que la position de la surface de réception de lumière dudit dispositif de réception de lumière ; et un faisceau lumineux direct émis par ladite source de lumière et un faisceau lumineux de retour allant vers le dispositif de réception de lumière après avoir été réfléchi par le support d'enregistrement magnéto-optique passent tous les deux à travers ledit élément optique.

**26.** Tête optique selon la revendication 25, dans laquelle au moins un signal d'erreur de mise au point est généré en détectant un changement de la forme du point dudit faisceau lumineux de retour formé sur ledit dispositif de réception de lumière.

**27.** Tête optique selon la revendication 25 ou la revendication 26, dans laquelle :

ledit élément optique est constitué d'une résine transparente ; ledit élément optique comporte un rebord au niveau de sa périphérie ; et ledit rebord comporte une porte pour utilisation pendant le moulage par injection.

**28.** Tête optique selon l'une quelconque des revendications 25 à 27, dans laquelle :

ledit élément optique est constitué d'une résine transparente ; et un repère d'alignement (2522, 2532, 2572) pour le positionnement est formé ou imprimé sur la surface principale de la surface arrière dudit élément optique et sur la surface dudit dispositif de réception de lumière.

**29.** Tête optique selon l'une quelconque des revendications 25 à 28, dans laquelle le séparateur de faisceaux lumineux est formé sur la surface principale ou sur la surface arrière dudit élément optique.

**30.** Tête optique selon la revendication 29, dans laquelle le séparateur de faisceau lumineux est un hologramme et ledit hologramme est un hologramme griffé qui est griffé sous la forme de dents triangulaires avec un pas des rainures de diffraction.

**31.** Tête optique selon l'une quelconque des revendications 25 à 30, comprenant :

un boîtier pour contenir ledit dispositif de réception de lumière et ladite source de lumière ; dans laquelle ledit dispositif de réception de lumière et ladite source de lumière sont enfermées avec le ledit élément optique et ledit boîtier.

**32.** Tête optique selon la revendication 31, dans laquelle :

ledit élément optique et ledit boîtier sont fixés l'un à l'autre par un adhésif (85) ; et la dureté dudit adhésif lorsqu'il est durci est inférieure à la dureté des matériaux dudit élément optique (2570) et dudit boîtier (80).

**33.** Tête optique selon l'une quelconque des revendications 11 à 32, utilisant un élément optique, ledit élément optique étant divisé en une région finie miroir et une région à réflexion irrégulière avec de petites irrégularités, dans laquelle un faisceau lumineux direct et un faisceau lumineux de retour passent à travers ladite région finie miroir.

**34.** Tête optique selon l'une quelconque des revendications 11 à 32, utilisant un élément optique, ledit élément optique étant divisé en une région revêtue (3121) revêtue d'un film anti-réflexion et d'une région non-revêtue (3122), dans laquelle :

la partie centrale d'un faisceau lumineux divergent émis par un dispositif d'émission de lumière passe à travers ladite région revêtue qui est revêtue d'un film anti-réflexion ; une partie dudit faisceau lumineux divergent est réfléchie depuis ladite région non-revêtue ; et il est prévu un second dispositif de réception de lumière pour recevoir la lumière réfléchie depuis ladite région non-revêtue de façon à détecter la puissance lumineuse émise.

**35.** Tête optique selon la revendication 34 comportant :

ledit second dispositif de réception de lumière (3175) pour détecter la puissance lumineuse émise ; et un premier dispositif de réception de lumière (3170) pour recevoir un faisceau de lumière en retour réfléchi depuis un support d'enregistrement optique ; dans lequel lesdits premier et second dispositifs de réception de lumière sont formés sur un substrat sous la forme d'une seule pièce.

**36.** Procédé de fabrication d'un polariseur selon la revendication 4, dans lequel ledit film mince optique de polarisation est formé en transférant une forme du type dents de scie à un substrat transparent par estampage à chaud et en déposant en outre un film mince diélectrique sur celui-ci par évaporation.

**37.** Procédé de fabrication d'un polariseur selon la revendication 4, dans lequel ledit film mince optique de polarisation est formé en pressant et en faisant rouler un rouleau ayant une structure en forme de dents de scie sur sa surface sur un substrat transparent de façon à transférer en continu une forme du type de dents de scie audit substrat transparent et en déposant en outre un film mince diélectrique sur ledit substrat par évaporation.

**38.** Procédé de fabrication d'un polariseur selon la revendication 8, comprenant les étapes consistant à :

former des évidements avec des plans inclinés dans un élément parmi ledit premier élément optique et ledit second élément optique ; déposer un film mince diélectrique multi-couches sur lesdits plans inclinés par évaporation de façon à obtenir une fonction de séparateur de polarisation ; remplir lesdits évidements d'une résine ou d'un liquide transparent ; et coller lesdits premier et second éléments optiques l'un à l'autre.

**39.** Procédé selon la revendication 38, comprenant en outre l'étape consistant à effectuer un traitement de recuit.

**40.** Procédé de fabrication d'un polariseur selon la revendication 4, dans lequel le film mince optique de polarisation est formé par un procédé incluant les étapes consistant à :

effectuer un moulage par injection avec une résine ou du verre de façon à transférer une structure en dents de scie ; et déposer un film mince diélectrique sur la structure en dents de scie au moyen de l'évaporation.

(a)

(b)

FIG.1

FIG. 2

FIG.3

FIG.4

FIG.5

FIG.6

FIG.7

FIG.8

FIG.9

EP 0 608 432 B1

FIG.10

FIG.11

FIG.12

(a)  FIG.13  (b)

FIG.14

(a)  FIG.15  (b)

(a)  FIG.16  (b)

FIG.17

FIG. 18

FIG.19

FIG.20

FIG. 21

FIG. 22

(a) PARALLEL TO THE POLARIZATION AXIS

(b) NORMAL TO THE POLARIZATION AXIS

FIG. 23

FIG.24

CURRENT TO VOLTAGE CONVERSION

ADDITION AMPLIFIER 1709

DIFFERENTIAL AMPLIFIER 1711

MAGNETO OPTICAL SIGNAL 1713

ROM SIGNAL

1710

1712

1714

FIG. 25

FIG. 26

FIG. 27

FIG. 28

FIG.29

FIG.31

FIG.30

FIG.33

FIG.32

EP 0 608 432 B1

FIG.33

FIG.32

42

FIG. 34

FIG. 35

EP 0 608 432 B1

F I G.36

F I G.37

44

FIG. 38

FIG. 39

FIG. 40

FIG. 41

FIG.42

FIG.43

FIG.44

FIG.45

FIG.46

F I G.47

FIG.48

FIG.49

F I G.50

F I G.51

FIG.52

FIG.53